# FASCICULE DE BREVET EUROPEEN

(11) **EP 2 307 487 B1**
(45) Date de publication et mention de la délivrance du brevet: **04.05.2016**
(21) Numéro de dépôt: 09802530.7
(22) Date de dépôt: 30.07.2009
(51) Int. Cl.: C08J 3/075, C08K 9/08, C08K 9/10, C08J 5/00

(54) **CAPSULES OU AGGLOMÉRATS GÉLIFIES, LYOPHILISES, DE NANOOBJETS OU NANOSTRUCTURES, MATÉRIAUX NANOCOMPOSITES A MATRICE POLYMÈRE LES COMPRENANT, ET LEURS PROCÉDÉS DE PRÉPARATION.**
GELIERTE, LYOPHILISIERTE KAPSELN ODER AGGLOMERATE VON NANOGEGENSTÄNDEN ODER NANOSTRUKTUREN, NANOVERBUNDSTOFFMATERIALIEN AUS EINER POLYMERMATRIX, DIE DIESE ENTHALTEN, UND VERFAHREN ZU DEREN HERSTELLUNG
GELLED AND FREEZE-DRIED CAPSULES OR AGGLOMERATES OF NANO-OBJECTS OR NANOSTRUCTURES, NANOCOMPOSITE MATERIALS WITH A POLYMER MATRIX CONTAINING SAME, AND METHODS FOR PREPARING SAME

(30) Priorité: 31.07.2008 FR 0855311
(43) Date de publication de la demande: 13.04.2011
(73) Titulaire: Commissariat à l'Énergie Atomique et aux Énergies Alternatives, 75015 Paris (FR)
(72) Inventeur: TIQUET, Pascal, F-38100 Grenoble (FR)
(74) Mandataire: Ilgart, Jean-Christophe
(86) Numéro de dépôt international: PCT/EP2009/059901
(87) Numéro de publication internationale: WO 2010/012813

(56) Documents cités:
- EP-A- 1 626 067
- EP-A- 1 728 822
- EP-A- 1 749 854
- WO-A-2005/073289
- NADARAJAN, S.B. ET AL.: "Loading carbon nanotubes with viscous fluids and nanoparticles: a simpler approach" APPL. PHYS. A, vol. 89, 14 juillet 2007 (2007-07-14), pages 437-442, XP002515767
- SHINGO TAMESUE ET AL.: "Hierarchical carbon nanotube assemblies created by sugar-boric or boronic acid interactions" CHEM. COMMUN., 30 juillet 2008 (2008-07-30), pages 4478-4480, XP002515768

## Description

### DOMAINE TECHNIQUE

La présente invention a trait à des capsules ou agglomérats gélifiés, lyophilisés, de nanoobjets tels que des nanotubes de carbone, ou de nanostructures.

La présente invention a trait en outre à des matériaux nanocomposites à matrice polymère comprenant ces capsules ou agglomérats gélifiés, lyophilisés, ou préparés à partir de ces capsules ou agglomérats gélifiés, lyophilisés.

L'invention concerne aussi un procédé de préparation et de conditionnement de ces capsules ou agglomérats gélifiés, lyophilisés, ainsi qu'un procédé de préparation de ces matériaux nanocomposites à matrice polymère à partir de ces capsules ou agglomérats gélifiés, lyophilisés.

Enfin, l'invention concerne des utilisations de ces agglomérats ou capsules gélifiés, lyophilisés, de nanoobjets.

### ÉTAT DE LA TECHNIQUE ANTÉRIEURE

Le domaine technique de l'invention peut, de manière générale, être considéré comme celui de l'inclusion, l'incorporation, le confinement, à diverses fins de nanoobjets tels que des nanoparticules dans des matériaux, tels que des polymères.

Ainsi, selon un premier aspect de l'invention, le domaine technique de l'invention peut plus précisément être défini comme celui de la protection, du confinement de nanoparticules et de nanoobjets en vue de leur manipulation.

On notera également que le caractère invisible de ces nanoobjets par leur petite taille et le manque de connaissance sur leurs impacts sur le monde biologique et du vivant nécessite aussi un confinement et une encapsulation pour maîtriser la déssimination et satisfaire au principe de précaution.

Le domaine technique de l'invention peut, plus précisément selon un autre aspect, être défini comme celui des matériaux composites, plus précisément des matériaux nanocomposites et notamment des matériaux nanocomposites à matrice polymère.

Les matériaux nanocomposites à matrice polymère sont des matériaux multiphasiques, en particulier biphasiques, qui comportent une matrice polymère formant une première phase dans laquelle sont dispersés des nanoobjets tels que des nanoparticules formant au moins une deuxième phase que l'on dénomme généralement phase de renfort ou charge.

Les nanocomposites sont appelés ainsi car au moins une des dimensions des objets tels que des particules formant la phase de renfort ou charge est à l'échelle nanométrique, à savoir généralement inférieure ou égale à 100 nm, par exemple de l'ordre de un nanomètre à un ou quelques dizaines de nanomètres. En conséquence ces objets et particules sont dénommés nanoobjets ou nanoparticules.

Les nanocomposites à matrice polymère doivent théoriquement permettre pour des taux de charge relativement faibles, à savoir inférieurs à 10 % en poids, et même inférieurs à 1% en poids, d'obtenir une amélioration significative des propriétés du matériau, qu'il s'agisse des propriétés mécanique, électrique, thermique, magnétique ou autres ....

Cependant il s'est avéré difficile de disperser de manière homogène des nanoobjets, notamment à de faibles concentrations, par exemple moins de 1% en poids dans des matrices polymères. Cette difficulté à disperser de manière homogène les nanoobjets, notamment à de faibles concentrations dans des matrices polymères semble provenir notamment du fait que ces nanoobjets peuvent se présenter sous la forme de tubes, fils, nanocouches, ou être liés à des nanostructures ramifiées et que ces nanoobjets sont enchevêtrés, agrégés et parfois même branchés.

En conséquence on n'observe pas, notamment à de faibles concentrations en nanoobjets les améliorations quant aux propriétés des matériaux, que l'on est en droit d'attendre.

En d'autres termes, l'addition à des polymères de nanoobjets à de faibles concentrations se révèle inefficace pour améliorer effectivement les propriétés de ces polymères du fait de l'impossibilité d'obtenir une dispersion véritablement homogène de ces nanoobjets dans la matrice polymère.

A cet égard l'exemple des nanotubes de carbone (« CNT ») est le plus significatif, puisqu'il faut les charger à plus de 5% en poids de la matrice polymère pour espérer obtenir une amélioration maximale des propriétés du matériau, alors que la théorie prévoit un seuil de percolation à seulement 0,1 % en poids de nanotubes de carbone dans le polymère [1].

Afin d'améliorer la dispersion des nanoobjets dans la matrice polymère et la compatibilité des nanoobjets avec cette matrice polymère, diverses techniques ont été successivement testées comme par exemple les traitements et les fonctionnalisations chimiques, l'utilisation de surfactants et d'agents compatibilisants, et même la polymérisation à la surface de nanotubes ou de nanostructures de polymères thermoplastiques comme le polyéthylène (PE), le polypropylène (PP), le polystyrène (PS), ou les copolymères éthylène-norbornène. Ainsi le document [2] décrit-il un nanocomposite à matrice polymère comprenant des nanotubes de carbone enrobés avec un polymère d'enrobage non miscible avec le polymère de la matrice polymère.

Pour les polymères de la matrice à caractère polaire comme les polyamides, les techniques mentionnées ci-dessus peuvent s'avérer efficaces et suffisantes, mais pour les polymères aliphatiques et apolaires comme les polyéthylènes (PE), les polypropylènes (PP), réticulés ou non, les polystyrènes (PS), les copolymères de cyclooléfines (COC), ces techniques ne permettent pas d'obtenir une dispersion homogène des nanoobjets dans la matrice, ni par voie de conséquence, une amélioration des propriétés, notamment à de faibles concentrations.

La raison principale de l'efficacité insuffisante de ces techniques de comptabilisation et d'amélioration de l'homogénéité de dispersion des nanoobjets dans la matrice polymère est que les nanoobjets, nanotubes ou nanostructures de même nature sont, à l'issue de leur synthèse, totalement enchevêtrés.

L'utilisation d'ultrasons puissants et/ou d'extrudeuses puissantes ne permet pas de remédier à ces problèmes car l'énergie ainsi apportée détruit les nanotubes ou nanostructures sans les disperser, et de plus les agglomère de nouveau.

La solution au problème de la comptabilisation et de l'amélioration de l'homogénéité de la dispersion de nanoobjets dans une matrice polymère ne réside donc ni dans la fonctionnalisation des nanoobjets, ni dans la mise en oeuvre d'énergie mécanique importante.

Il est connu par ailleurs que lorsque les nanoobjets tels que des nanotubes, ou les nanostructures se trouvent dans un milieu liquide, à l'état dilué, à une faible concentration, par exemple inférieure ou égale à 1% en masse, ils sont généralement correctement dispersés, c'est-à-dire dispersés de manière homogène et organisée, et il serait donc souhaitable de conserver cette organisation.

Cependant, il n'a pas été possible jusqu'à présent de conserver la même organisation et la même homogénéité des nanoobjets dispersés dans un milieu liquide dans un matériau composite à matrice polymère solide enfermant ces nanoobjets et préparé à partir des ces dispersions.

Il existe donc, au vu de ce qui précède, un besoin pour des matériaux nanocomposites à matrice polymère dans lesquels des nanoobjets ou nanostructures sont dispersés, répartis, organisés, de manière homogène, notamment à une faible concentration.

Il existe encore un besoin pour un procédé permettant préparer de tels matériaux composites à matrice polymère. Ce procédé étant en outre simple, fiable, reproductible et d'un faible coût.

En outre, il existe un besoin notamment pour des matériaux assurant le confinement de nanoobjets dans le but de maîtriser leur déssimination dans la nature.

### EXPOSÉ DE L'INVENTION

Le but de la présente invention est entre autres de répondre à ces besoins.

Le but de la présente invention est notamment de fournir un matériau nanocomposite à matrice polymère qui ne présente pas les inconvénients, défauts, limitations et désavantages des matériaux nanocomposites de l'art antérieur, et qui résolve les problèmes des matériaux de l'art antérieur.

Le but de la présente invention est encore de fournir un procédé de préparation d'un tel matériau composite à matrice polymère qui, de même, ne présente pas les inconvénients, défauts, limitations et désavantages des procédés de préparation de matériaux nanocomposites de l'art antérieur, et qui résolve les problèmes des procédés de l'art antérieur.

Le but de la présente invention est en d'autres termes de faire en sorte que l'organisation et l'homogénéité présentées par des nanoobjets dispersés dans un milieu liquide soient conservées dans un matériau composite à matrice polymère solide préparé à partir de ces nanoobjets dispersés.

Ce but, et d'autres encore sont atteints, conformément à un premier aspect de l'invention en fournissant un agglomérat ou une capsule préparé(e) par lyophilisation d'un premier agglomérat ou première capsule, ledit premier agglomérat ou première capsule comprenant un solvant, des nanoobjets ou nanostructures enrobés par des macromolécules de polysaccharides étant répartis de manière homogène dans ledit premier agglomérat ou première capsule, et lesdites macromolécules formant dans au moins une partie du premier agglomérat ou première capsule un gel par réticulation avec des ions positifs.

Le premier agglomérat ou première capsule peut être dénommé pour simplifier « agglomérat gélifié » ou « capsule gélifiée».

En outre, « premier agglomérat » peut être utilisé dans la présente description à des fins de simplification à la place de « premier agglomérat ou première capsule ».

L'agglomérat préparé par lyophilisation de ce premier agglomérat gélifié peut être appelé par simplification « agglomérat gélifié lyophilisé » ou « agglomérat lyophilisé ».

Par « répartis de manière homogène » on entend généralement que les nanoobjets sont répartis uniformément, régulièrement dans tout le volume du premier agglomérat ou première capsule et que leur concentration est sensiblement la même dans tout le volume du premier agglomérat ou première capsule, dans toutes les parties de celui-ci.

Cette répartition homogène est en outre conservée dans l'agglomérat lyophilisé préparé à partir de ce premier agglomérat ou première capsule.

Le terme « lyophilisation » est un terme bien connu de l'homme du métier. La lyophilisation comprend généralement une étape de congélation au cours de laquelle le solvant (liquide) du premier agglomérat ou première capsule est mis sous forme solide, par exemple sous forme de glace, puis une étape de sublimation au cours de laquelle, sous l'effet du vide, le solvant solide tel que de la glace est transformé directement en vapeur, par exemple en vapeur d'eau, qui est récupérée. Eventuellement, une fois que tout le solvant liquide, par exemple toute la glace, est éliminé, les agglomérats ou capsules sont séchés à froid.

Le gel peut être formé dans la totalité du premier agglomérat ou première capsule, ou bien le gel peut être formé seulement dans une partie du premier agglomérat ou première capsule, par exemple à la surface du premier agglomérat ou première capsule, l'intérieur du premier agglomérat ou première capsule étant à l'état liquide.

Avantageusement, la concentration des nanoobjets ou nanostructures (qui est supérieure à 0% en masse) est inférieure ou égale à 5% en masse, de préférence elle est inférieure ou égale à 1% en masse, de préférence encore elle est de 10 ppm à 0,1% en masse de la masse totale du premier agglomérat.

Le solvant du premier agglomérat peut comprendre en volume 50% d'eau ou plus, de préférence 70% d'eau ou plus, de préférence encore 99% d'eau ou plus, mieux 100 % d'eau (le solvant du premier agglomérat est donc alors, constitué par de l'eau).

Le solvant du premier agglomérat, lorsqu'il ne comprend pas 100% d'eau, peut comprendre en outre au moins un autre composé solvant choisi généralement parmi les alcools, en particulier les alcools aliphatiques, tels que l'éthanol ; les solvants polaires, en particulier les cétones, telles que l'acétone ; et leurs mélanges.

Le solvant du premier agglomérat peut en outre comprendre un polymère soluble dans ledit solvant.

Les nanoobjets peuvent être choisis parmi les nanotubes, les nanofils, les nanoparticules, les nanocristaux et les mélanges de ceux-ci.

Les nanoobjets ou nanostructures peuvent être fonctionnalisés, notamment chimiquement, en particulier en surface, de façon à introduire des fonctions nouvelles par l'intermédiaire d'une chimie de surface.

Le matériau constituant les nanoobjets ou les nanostructures peut être choisi parmi le carbone, les métaux, les alliages métalliques, les oxydes métalliques tels que les oxydes de terres rares éventuellement dopés, les polymères organiques, et les matériaux comprenant plusieurs parmi ceux-ci.

Avantageusement, les nanoobjets sont des nanotubes de carbone ("CNT"), par exemple des nanotubes de carbone mono paroi (« SWCNT ») ou multiparoi (« MWCNT »), ou des nanoparticules de métaux ou d'alliages métalliques ou d'oxydes métalliques.

Les macromolécules de polysaccharide peuvent être choisies parmi les pectines, les alginates, l'acide alginique, et les carraghénanes.

Les alginates peuvent être des alginates extraits d'algues brunes *Phaeophyceae,* principalement les *Laminaria* telles que *Laminaria hyperborea ;* et les *Macrocystis* telles que *Macrocystis pyrifera.*

Avantageusement, la macromolécule de polysaccharide a une masse moléculaire de 80000 g/mol à 500000 g/mol, de préférence de 80000 g/mol à 450000 g/mol.

Le premier agglomérat ou agglomérat gélifié, notamment dans le cas où il ne comprend pas déjà en outre un polymère soluble dans le solvant du premier agglomérat, peut être imprégné par au moins un polymère ou monomère soluble dans le solvant du premier agglomérat, de préférence par un polymère hydrosoluble choisi par exemple parmi les polyéthylènes glycol (PEG), les poly(oxyde d'éthylènes), les poly(acrylamides), les poly(vinyl pyridines), les polymères (méth)acryliques, les chitosanes, les celluloses, les PVAs et tous les autres polymères hydrosolubles.

Lors de la lyophilisation, le solvant du premier agglomérat sera totalement éliminé, remplacé par le polymère ou monomère, de préférence hydrosoluble tel que le PEG imprégnant l'agglomérat gélifié.

De même lors de la lyophilisation, le solvant du premier agglomérat, ou agglomérat gélifié, peut être totalement éliminé et remplacé par le polymère ou monomère soluble dans le solvant de l'agglomérat et déjà présent dans l'agglomérat.

Le premier agglomérat peut être en outre réticulé et/ou polymérisé.

L'agglomérat lyophilisé selon l'invention contient généralement de 1% à 90% en masse, de préférence de 30% à 75% en masse, de préférence encore de 50% à 60% en masse, de nanoobjets ou de nanostructures, et de 10% à 99% en masse, de préférence de 25% à 70% en masse, de préférence encore de 40% à 50% en masse de polysaccharide(s).

Avantageusement, l'agglomérat lyophilisé selon l'invention peut en outre avoir subi après lyophilisation, un traitement thermique ou un traitement, attaque enzymatique.

Cette attaque enzymatique peut être réalisée par exemple avec une enzyme de dégradation des alginates, telle qu'une enzyme de type Alginate Lyase, comme l'enzyme EC 4.2.2.3, aussi appelée E-poly(β-D-mannuronate) lyase.

Le traitement thermique ou le traitement enzymatique permet d'éliminer au moins en partie, c'est-à-dire en partie ou en totalité, le polysaccharide de l'agglomérat ayant subi la lyophilisation.

Généralement, le traitement thermique permet d'éliminer au moins en partie le polysaccharide tandis que le traitement enzymatique permet généralement d'éliminer totalement le polysaccharide.

L'attaque enzymatique peut être réalisée selon des conditions standards à la portée de l'homme du métier, par exemple par mise en solution aqueuse des agglomérats lyophilisés et introduction de l'enzyme dans cette solution.

Après ce traitement thermique ou enzymatique, l'agglomérat lyophilisé contient généralement de 50% à 100% en masse, de préférence de 80% à 100% en masse de nanoobjets ou nanostructures.

Ce traitement thermique ou enzymatique permet donc d'accroître la teneur en nanoobjets ou nanostructures tels que les nanotubes de carbone sans que la structure des agglomérats, capsules, ne soit changée et sans que la répartition homogène des nanoobjets ou nanostructures dans l'agglomérat ne soit affectée.

L'étape supplémentaire de traitement thermique que l'on pourrait appeler aussi étape de calcination des capsules, agglomérats lyophilisés ou l'étape supplémentaire de traitement enzymatique, permet en effet d''éliminer au moins en partie le polysaccharide, par exemple l'alginate tout en conservant l'organisation obtenue au préalable et notamment la répartition homogène des nanoobjets présente dans les premiers agglomérats (gélifiés) et dans les agglomérats lyophilisés.

L'étape supplémentaire de traitement thermique ou de traitement enzymatique, réalisée après la lyophilisation permet donc de créer des agglomérats ou capsules chargés en nanoobjets ou nanostructures tels que des CNTs à une teneur très élevée pouvant notamment aller de 80 à 95% en masse de l'agglomérat.

Une telle teneur élevée est obtenue même avec une teneur très faible en nanoobjets ou en nanostructures tels que des CNTs dans les agglomérats gélifiés, car les tubes, par exemple, sont généralement longs avec une longueur par exemple comprise entre 1µm et 100µm.

Une telle teneur est supérieure à toutes les teneurs en nanoobjets ou nanostructures jusqu'alors obtenues dans de tels agglomérats ou capsules et ce sans que la répartition homogène de ces nanoobjets ou nanostructures, leur organisation tridimensionnelle, déjà présente aussi bien dans les premiers agglomérats que dans les agglomérats lyophilisés ne soit affectée dans les agglomérats après traitement thermique que l'on pourrait aussi appeler agglomérats « calcinés » ou dans les agglomérats après traitement enzymatique.

En d'autres termes, l'étape de traitement thermique ou calcination, ou l'étape de traitement enzymatique, vise à éliminer totalement ou partiellement le polysaccharide dans l'agglomérat lyophilisé. On obtient à l'issue de l'étape de traitement thermique, calcination, ou de traitement enzymatique, réalisée après la lyophilisation, des structures qui peuvent être uniquement formées de nanoobjets ou nanostructures (lorsque le polysaccharide tel que l'alginate a été totalement éliminé) tels que des CNTs, ces structures étant organisées et poreuses, ce qui constitue un avantage pour intégrer ces structures dans certains polymères.

La teneur en polysaccharide dans les agglomérats après traitement thermique ou enzymatique est généralement de 1% à 50% en masse, de préférence de 1% à 20% en masse, voire 0% en masse, notamment lorsqu'on réalise une attaque, traitement, enzymatique.

L'invention concerne en outre l'utilisation de l'agglomérat lyophilisé tel que décrit plus haut (ayant éventuellement aussi un traitement thermique ou enzymatique), dans des systèmes microfluidiques, ou comme métamatériaux notamment pour simuler le comportement des plasmas sous rayonnement électromagnétique.

L'invention a également trait à un matériau nanocomposite solide à matrice polymère ou composite comprenant un agglomérat tel que défini plus haut (quel qu'il soit), dans lequel les nanoobjets ou nanostructures sont répartis de manière homogène.

Le(s) polymère(s) de la matrice peut(peuvent) être choisi(s) parmi les polymères aliphatiques et apolaires comme les polyoléfines, telles que les polyéthylènes, et les polypropylènes, les polystyrènes, les copolymères de cyclooléfines ; mais aussi parmi les polymères polaires tels que les polyamides et les poly(méth)acrylates comme le PMMA ; et les mélanges de ceux-ci.

Le polymère de la matrice peut être aussi choisi parmi les polymères qui fondent ou qui sont solubles dans l'eau.

Le composite de la matrice peut être choisi parmi les matériaux composites comprenant au moins un polymère choisi par exemple parmi les polymères cités plus haut pour la matrice, et une charge inorganique.

L'invention concerne en outre un procédé de préparation de l'agglomérat tel que défini plus haut, dans lequel on réalise les étapes successives suivantes :
a) on disperse dans un premier solvant comprenant en majorité de l'eau des nanoobjets ou nanostructures, on met en solution dans le premier solvant des macromolécules de polysaccharide et éventuellement un polymère ou monomère soluble dans le premier solvant, moyennant quoi on obtient une première solution ;
b) on prépare une troisième solution en mettant en contact la première solution avec une deuxième solution dans un deuxième solvant comprenant en majorité de l'eau, d'au moins un sel soluble dans l'eau, susceptible de libérer dans la deuxième solution des cations monovalents, divalents ou trivalents, moyennant quoi on obtient un premier agglomérat ;
c) on sépare le premier agglomérat de la troisième solution ;
d) on lyophilise le premier agglomérat ;
e) éventuellement, on réalise un traitement thermique ou enzymatique du premier agglomérat lyophilisé.

Le premier solvant peut comprendre en volume 50% d'eau ou plus, de préférence 70% en volume d'eau ou plus, de préférence encore 99% en volume d'eau ou plus, et mieux 100 % en volume d'eau.

Les nanoobjets, nanostructures, et les polysaccharides sont avantageusement tels que cela a déjà été défini plus haut.

Le premier solvant lorsqu'il ne comprend pas 100% d'eau, peut comprendre en outre au moins un autre composé solvant choisi généralement parmi les alcools, en particulier les alcools aliphatiques tels que l'éthanol ; les composés solvants polaires en particulier les cétones telles que l'acétone ; et leurs mélanges.

La dispersion des nanoobjets dans le solvant et la mise en solution des polysaccharides peuvent être deux opérations simultanées, ou bien elles peuvent être deux opérations consécutives, la dispersion précédant la mise en solution, ou vice et versa.

Avantageusement, le rapport du nombre de macromolécules au nombre de nanoobjets dans la première solution peut être de 1 à 10, de préférence ce rapport est égal à, ou voisin de 1.

La teneur en nanoobjets et la teneur en macromolécules de polysaccharides (qui sont supérieures à 0% en masse) peuvent être avantageusement inférieures ou égales à 5% en masse, de préférence inférieures ou égales à 1% en masse, et de préférence encore de 10 ppm à 0,1% en masse de la masse du premier solvant.

Le deuxième solvant peut comprendre 50% en volume d'eau ou plus, de préférence 70% en volume d'eau ou plus, de préférence encore 99% en volume d'eau ou plus, mieux 100 % en volume d'eau.

Le deuxième solvant peut comprendre en outre, lorsqu'il ne comprend pas 100% d'eau, au moins un autre composé solvant choisi généralement parmi les alcools en particulier les alcools aliphatiques tels que l'éthanol ; les solvants polaires en particulier les cétones telles que l'acétone ; et leurs mélanges.

Avantageusement, le deuxième solvant est identique au premier solvant.

Avantageusement, les cations divalents peuvent être choisis parmi Cd²⁺, Cu²⁺, Ca²⁺, Co²⁺, Mn²⁺, Fe²⁺, Hg²⁺ ; les cations monovalents peuvent être choisis parmi Li⁺, Na⁺, K⁺, Rb⁺, Cs⁺, Ag⁺, Ti⁺, Au⁺ ; et les cations trivalents peuvent être choisis parmi Fe³⁺, et Al³⁺. Les cations préférés sont le Cu²⁺, le Ca²⁺ ou le Fe³⁺.

Avantageusement, la deuxième solution peut comprendre plusieurs sels de sorte qu'un mélange de cations, de préférence un mélange de cations comprenant au moins un cation monovalent, au moins un cation divalent, et au moins un cation trivalent peut être libéré dans la deuxième solution.

Le procédé de préparation du premier agglomérat est réversible et peut éventuellement comprendre en outre une étape c1) (réalisée sur l'agglomérat obtenu à l'issue de l'étape c)), au cours de laquelle le premier agglomérat est mis en contact avec au moins un agent chélatant tel que l'acide diéthylène tétramine pentaacétique (DTPA), l'acide éthylène diamine tétraacétique, ou la trientine (Triéthylène tétramine, TETA) pour piéger et désactiver le rôle des cations.

A l'issue de l'étape b) ou de l'étape c) l'agglomérat obtenu, et éventuellement séparé par exemple par simple filtration, peut être imprégné par une solution d'un polymère ou monomère soluble dans le premier solvant, de préférence par une solution aqueuse d'au moins un polymère ou monomère hydrosoluble choisi par exemple parmi les polyéthylènes glycol (PEG), les poly(oxyde d'éthylènes), les poly(acrylamides), les poly(vinyl pyridines), les polymères (méth)acryliques, les chitosanes, les celluloses, les PVAs et tous les autres polymères hydrosolubles, puis on procède à la lyophilisation du premier agglomérat imprégné selon l'étape d).

Cependant, comme on l'a déjà mentionné, un polymère ou monomère peut être également ajouté lors de l'étape a) de façon à consolider mécaniquement la solution de nanoobjets dispersés grâce au polysaccharide, ledit polymère ou monomère étant alors soluble dans le solvant (« premier solvant ») utilisé dans l'étape a). Il peut s'agir en particulier d'un monomère ou polymère hydrosoluble qui peut être choisi parmi les polymères déjà cités plus haut.

L'étape de lyophilisation peut être réalisée sur le premier agglomérat qu'il comprenne ou non un polymère ou monomère ajouté lors de l'étape a) et qu'il ait été imprégné ou non par une solution d'un polymère ou monomère, par exemple par une solution aqueuse d'un polymère ou monomère hydrosoluble à l'issue de l'étape b) ou de l'étape c).

Lors de l'étape e), on réalise éventuellement un traitement thermique ou enzymatique de l'agglomérat lyophilisé.

Le traitement thermique ou enzymatique a pour but d'éliminer au moins en partie le polysaccharide encore présent.

Généralement, on élimine par ce traitement thermique au moins 30% en masse du polysaccharide présent dans les agglomérats lyophilisés, par exemple de 30 à 45% en masse. On peut même éliminer totalement le polysaccharide avec l'attaque enzymatique.

On obtient à l'issue de ce traitement thermique ou enzymatique un agglomérat comprenant généralement de 0 à 50% en masse, de préférence de 0% à 20% en masse de polysaccharide, et de 50% à 100% en masse, de préférence de 80% à 100% en masse de nanoobjets ou nanostructures.

Le traitement thermique doit être réalisé à une température telle qu'il permette l'élimination au moins partielle du polysaccharide des agglomérats lyophilisés.

Avantageusement, il est réalisé à une température de 400 à 600°C, de préférence de 500 à 550°C, pendant une durée de 1 à 5 heures, de préférence de 1 à 3 heures, de préférence encore de 1 à 2 heures, par exemple à une température de 300°C pendant une heure.

Les conditions du traitement enzymatique, comme on l'a déjà indiqué plus haut, peuvent être facilement déterminées par l'homme du métier.

L'invention concerne enfin un procédé de préparation d'un matériau nanocomposite dans lequel on procède à l'incorporation d'au moins un agglomérat (lyophilisé) éventuellement traité thermiquement ou enzymatiquement tel que défini dans ce qui précède dans une matrice polymère ou composite.

En d'autres termes, on peut incorporer dans la matrice polymère ou composite, un agglomérat lyophilisé, ou un agglomérat traité thermiquement, calciné, ou un agglomérat traité enzymatiquement.

Le polymère de la matrice a déjà été défini plus haut.

L'incorporation de l'agglomérat (lyophilisé et éventuellement traité thermiquement ou enzymatiquement), dans la matrice polymère peut être réalisée par un procédé de plasturgie tel que l'extrusion.

L'extrusion consiste à mettre en fusion n-matériaux et à les malaxer le long d'une vis ou d'une bi-vis avec un profil de température et une vitesse de rotation optimisés pour obtenir un mélange optimal.

Au bout de cette bi-vis ou mono-vis, se trouve une filière qui met en forme le mélange avant sa solidification complète. La forme peut être un jonc, un film ou avoir tout type de profil.

Les agglomérats selon l'invention, en tant que tels, n'ont jamais été décrits ni suggérés dans l'art antérieur, ils permettent pour la première fois de conserver dans le matériau nanocomposite solide final selon l'invention la même organisation, notamment la même répartition homogène des nanoobjets ou nanostructures, que celle qui existait dans la dispersion de ces nanoobjets ou nanostructures dans un milieu liquide.

Selon l'invention, cette organisation est conservée dans le premier agglomérat, puis dans l'agglomérat lyophilisé puis dans l'agglomérat ayant subi le traitement thermique ou enzymatique.

En fait, la structure gélifiée des agglomérats selon l'invention permet de figer, de fixer, de « geler » de manière stable l'organisation des nanoobjets ou nanostructures, par exemple la répartition homogène, qui était celle des nanoobjets dans la dispersion liquide et de la conserver ensuite intégralement dans le matériau composite final.

L'invention apporte une solution aux problèmes de l'art antérieur et répond à l'ensemble des besoins énumérés plus haut.

En particulier, grâce aux agglomérats de l'invention il est possible, de manière inattendue, de conserver l'état de dispersion des nanoobjets ou nanostructures qui existe dans la dispersion initiale dans le matériau nanocomposite final qui peut être ensuite traité, transformé de manière classique par tout procédé de plasturgie, par exemple par extrusion.

Ce problème fondamental n'avait jamais pu être résolu dans l'art antérieur et constituait ce que l'on a coutume d'appeler un « verrou technologique » que l'invention permet d'éliminer.

Dans le matériau composite final on retrouve donc par exemple la même répartition homogène dans l'ensemble du volume du matériau des nanoobjets ou nanostructures que dans la dispersion de départ.

Les matériaux nanocomposites selon l'invention ne sont ni décrits ni suggérés dans l'art antérieur et se différencient intrinsèquement des matériaux nanocomposites de l'art antérieur, notamment par le fait qu'ils comprennent les agglomérats selon l'invention, qui leurs communiquent des propriétés intrinsèquement nouvelles et inattendues vis-à-vis des matériaux nanocomposites de l'art antérieur, en particulier pour ce qui est de l'homogénéité de la répartition des nanoobjets ou nanostructures à de faibles teneurs, concentrations.

En effet, cette conservation de l'état, qui était celui des nanoobjets ou nanostructures dans la dispersion de départ, aussi dans le matériau composite final est intimement liée à la mise en oeuvre des agglomérats « gélifiés » particuliers selon l'invention, et est en particulier observée de manière surprenante, pour une faible concentration en nanoobjets ou nanostructures, à savoir une concentration généralement inférieure ou égale à 5% en masse, de préférence inférieure ou égale en 1% en masse, de préférence de 10 ppm à 0,1% en masse dans le matériau composite.

Mais l'invention peut aussi être mise en oeuvre de manière avantageuse pour de fortes concentrations en nanoobjets ou en nanostructures par exemple une concentration pouvant aller jusqu'à et voisine de 20% en masse. A ces fortes concentrations le procédé selon l'invention permet de maîtriser l'organisation, l'arrangement et le niveau d'enchevêtrement.

De manière générale, la concentration en nanoobjets ou nanostructures sera donc de 10ppm à 20% en masse, de préférence de 10ppm à 5% en masse, de préférence encore de 10ppm à 1% en masse et mieux de 10 ppm à 0,1% en masse dans le matériau composite final.

Le problème de la dispersion homogène de nanoobjets ou nanostructures à des concentrations faibles dans des nanocomposites se posait avec particulièrement d'acuité et n'avait jamais reçu de solution, du moins de solution satisfaisante, dans l'art antérieur.

Du fait de la répartition homogène des nanoobjets, nanostructures obtenue selon l'invention à un faible taux, à une faible concentration, à savoir généralement inférieure ou égale à 5% en masse, de préférence inférieure ou égale à 1% en masse, l'amélioration des propriétés (mécanique, électrique, thermique, magnétique ...) dues à ces nanoobjets tels que des nanotubes de carbone, ou nanostructures est observée à de plus faibles concentrations. On réalise ainsi une économie importante de matériaux souvent coûteux d'une part, et dont les procédés de synthèse ne sont pas adaptés à la production de masse, d'autre part.

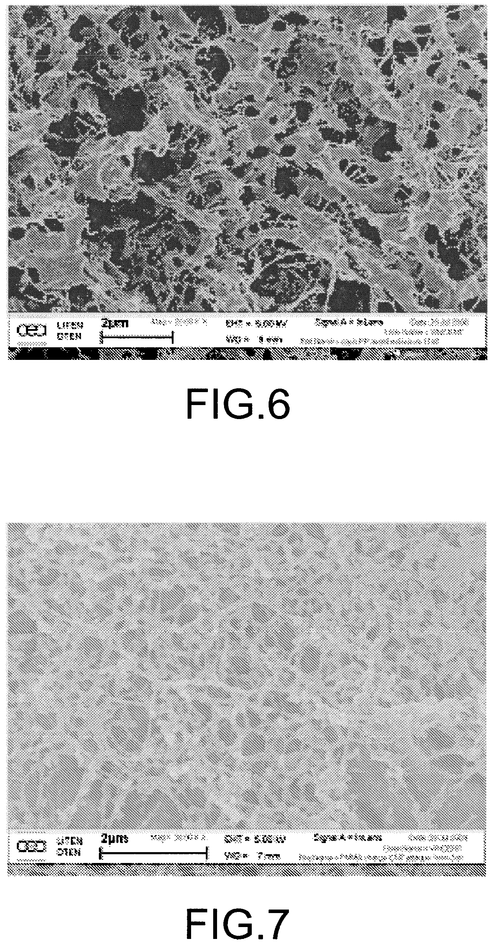

La forme, les propriétés des nanoobjets ne sont pas affectées dans les agglomérats selon l'invention puis dans les matériaux composites selon l'invention, elles ne subissent aucune dégradation aussi bien dans les agglomérats que dans le matériau composite (voir figures 6 et 7).

L'invention sera mieux comprise à la lecture de la description détaillée qui va suivre, faite à titre illustratif et non limitatif en référence aux dessins joints dans lesquels :
- La figure 1 montre la structure chimique d'une macromolécule de polysaccharide, qui est un alginate issu de l'algue brune *Phaeophyceae ;*
- La figure 2A montre à l'échelle nanométrique l'enroulement d'une macromolécule de polysaccharide autour d'un nanotube de carbone multiparoi (« MWCNT ») par interaction électrostatique des sites acides, les losanges (◆) représentent les sites acides des nanotubes de carbone, tandis que les triangles (▲) représentent les sites acides de la macromolécule de polysaccharide.
- La figure 2B représente la nanostructure en réseau de nanotubes de carbone multiparoi (« MWCNT ») avec les molécules de polysaccharides, les nanotubes de carbone sont représentés par les traits continus et les macromolécules de polysaccharides sont représentées par les enroulements autour de ces traits continus ;
- La figure 3 et une photographie qui montre un exemple de la formation d'un agglomérat conformément à l'invention dans une éprouvette, avec des nanotubes comme nanoobjets ;
- Les figures 4A et 4B sont des vues schématiques respectivement longitudinale et axiale, montrant un exemple d'organisation à l'échelle nanométrique d'un agglomérat gélifié selon l'invention, au centre de cet agglomérat se trouve un nanotube de carbone ;
- Les figures 5A, 5B et C sont des photographies à 1 échelle respectivement millimétrique, micrométrique et nanométrique montrant la dispersion optimale du réseau de nanotubes dans un matériau selon l'invention.

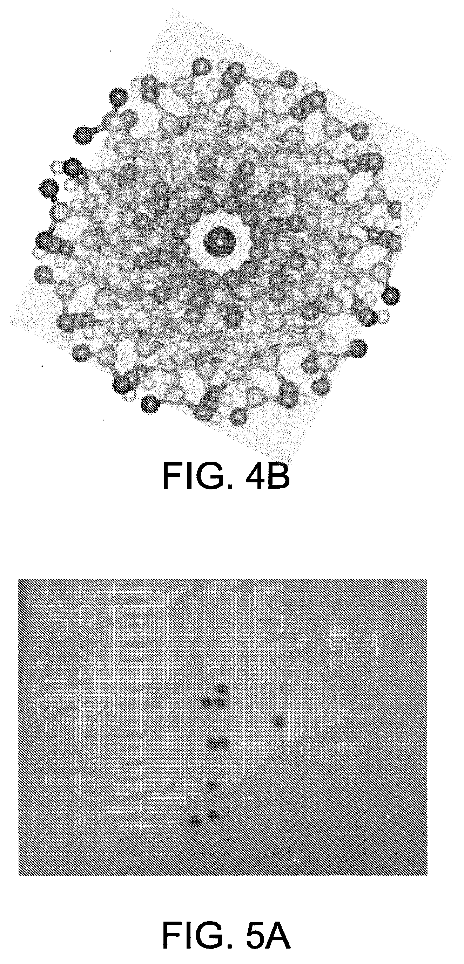

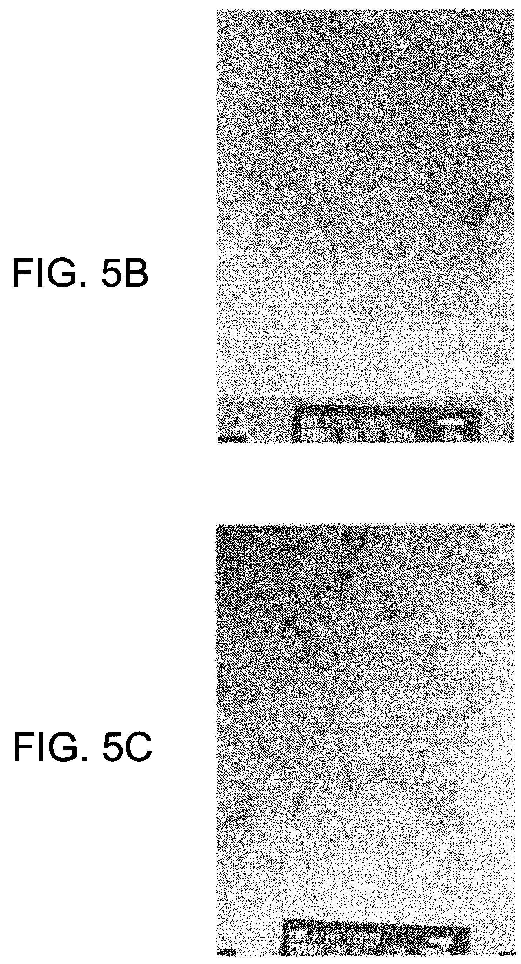

L'échelle représentée sur la figure 5B est de 1 µm, et l'échelle représentée sur la figure 5C est de 200 nm.
- La figure 6 est une photographie prise au microscope, montrant l'organisation de CNTs dans une capsule selon l'invention après lyophilisation.

L'échelle représentée sur la figure est de 2 µm.
- La figure 7 est une photographie prise au microscope, montrant l'organisation de CNTs après mélange de capsules selon l'invention avec du PMMA (PolyMéthacrylate de Méthyle).

L'échelle représentée sur la figure est de 2 µm.

La description détaillée qui suit est plutôt faite en liaison avec le procédé selon l'invention de préparation d'agglomérats « gélifiés » d'agglomérats lyophilisés, et de matériaux nanocomposites à matrice polymère mais elle contient aussi des enseignements qui s'appliquent aux agglomérats et aux matériaux selon l'invention.

En préambule à cette description détaillée nous précisons tout d'abord la définition de certains des termes utilisés dans la présente.

Par nanoobjets, on entend généralement tout objet seul ou lié à une nanostructure dont au moins une dimension est inférieure ou égale à 100 nm, par exemple de l'ordre de un nanomètre à un ou quelques dizaines de nanomètres.

Ces nanoobjets peuvent être par exemple des nanoparticules, des nanofils, des nanotubes par exemple des nanotubes de carbone (CNT) monoparoi (« SWNT » ou Single Wall Nanotube).

Par nanostructure, on entend généralement une architecture constituée d'un assemblage de nanoobjets qui sont organisés avec une logique fonctionnelle et qui sont structurés dans un espace allant du nanomètre cube au micromètre cube.

Par polysaccharide, on entend généralement une macromolécule organique polymérique constituée d'une chaîne d'unités de monosaccharides. Une telle macromolécule peut être représentée par une formule chimique de la forme -[Cₓ(H₂O)y]ₙ.

Par agglomérat (ou capsule), on entend généralement un système, comprenant, de préférence composé, constitué par un solvant, de préférence un solvant comprenant en majorité de l'eau ou constitué d'eau ; des nanoobjets ou nanostructures ; des macromolécules de polysaccharides ; et des ions positifs jouant le rôle de noeuds de réticulation entre deux molécules de polysaccharides.

Le terme métamatériaux, en physique, en électromagnétisme, désigne généralement dans son ensemble des matériaux composites et nanocomposites artificiels qui présentent des propriétés électromagnétiques que l'on ne trouve pas dans les matériaux naturels.

On a déjà donné plus haut une définition des matériaux nanocomposites à matrice polymère.

Le procédé selon l'invention peut être défini comme un procédé de préparation d'agglomérats (ou capsules) « gélifiés », lyophilisés, et éventuellement calcinés ou traités enzymatiquement, de nanoobjets ou nanostructures.

Dans une première étape, on disperse dans un premier solvant comprenant généralement en majorité de l'eau des nanoobjets ou nanostructures, et on met en solution dans le premier solvant au moins une macromolécule appartenant à la famille des polysaccharides, moyennant quoi on obtient une première solution dans laquelle les nanoobjets ou nanostructures sont dispersés.

A ce stade du procédé, on peut ajouter à la première solution un polymère ou monomère soluble dans le premier solvant par exemple hydrosoluble, dont la fonction sera de maintenir la structure gélifiée lorsque le premier solvant tel que l'eau sera parti.

Par solvant comprenant en majorité de l'eau, on entend généralement que le solvant comprend 50% en volume ou plus d'eau, de préférence 70% en volume ou plus d'eau, et de préférence encore plus de 99% en volume d'eau, par exemple 100% d'eau.

Le premier solvant peut comprendre outre de l'eau dans les proportions précitées ci-dessus au moins un autre composé solvant, choisi généralement parmi les alcools, en particulier les alcools aliphatiques tels que l'éthanol ; les solvants polaires, en particulier les cétones telles que l'acétone ; et leurs mélanges.

Outre les solvants précités, la première solution peut comme on l'a précisé ci-dessus contenir en outre au moins un polymère choisi parmi tous les polymères solubles dans le premier solvant, notamment les polymères hydrosolubles comme les PEGs, les poly(oxyde d'éthylènes), les polyacrylamides, les poly(vinyl pyridines), les polymères (méth)acryliques, les celluloses, les chitosanes, les PVAs, ayant pour fonction de stabiliser de façon efficace la dispersion de nanoobjets, nanostructures.

Les nanoobjets sont tels que définis plus haut et peuvent être des nanotubes, des nanofils, des nanoparticules, des nanocristaux, ou un mélange de ceux-ci.

Le matériau constituant ces nanoobjets ou nanostructures n'est pas particulièrement limité et peut être choisi parmi le carbone, les métaux et alliages métalliques, les oxydes métalliques tels que les oxydes de terres rares éventuellement dopés, les polymères organiques ; et les mélanges de ceux-ci.

Des nanoobjets préférés sont notamment les nanotubes de carbone (« CNT » ou Carbon Nanotubes en langue anglaise) que ce soient les nanotubes de carbone monoparoi (« SWCNT » ou Single Wall Carbon Nanotubes en langue anglaise) ou multiparoi (« MWCNT » ou Multi Wall Carbon Nanotubes en langue anglaise), les nanoparticules de métaux et alliages, les nanoparticules de « traceurs » à savoir d'oxydes de terres rares éventuellement dopés.

Les nanostructures peuvent être des constructions, assemblages dont les briques sont les nanoobjets.

Les nanostructures peuvent être par exemple des nanotubes de carbone « décorés » de nanoparticules de platine, de cuivre, d'or ; des nànofils de silicium « décorés » d'or, de nickel, de platine, etc...

Parmi les nanostructures on peut aussi citer notamment la nanostructure ZnO-Ni qui est une structure tridimensionnelle de ZnO terminée par des nanosphères de nickel.

Les agglomérats peuvent ne contenir qu'un seul type de nanoobjet ou nanostructure mais ils peuvent contenir à la fois plusieurs types de nanoobjets et/ou nanostructures qui peuvent différer par leur forme et/ou le matériau les constituant et/ou leur taille.

Par exemple, un agglomérat pourra contenir à la fois des nanotubes de carbone et des nanoparticules de métal tel que le cuivre.

Il n'existe aucune limitation quant à la macromolécule de polysaccharide et toutes les molécules appartenant à la famille des polysaccharides peuvent être utilisées dans le procédé selon l'invention. Il peut s'agir de polysaccharides naturels ou synthétiques.

La macromolécule de polysaccharide peut être choisie parmi les pectines, les alginates, l'acide alginique, et les carraghénanes.

Par alginates on entend aussi bien l'acide alginique que les sels et dérivés de celui-ci tels que l'alginate de sodium. Les alginates et notamment l'alginate de sodium sont extraits de diverses algues brunes *Phaeophyceae,* principalement les *Laminaria* telles que *Laminaria hyperborea ;* et les *Macrocystis* telles que *Macrocystis pyrifera.* L'alginate de sodium est la forme commercialisée la plus courante de l'acide alginique.

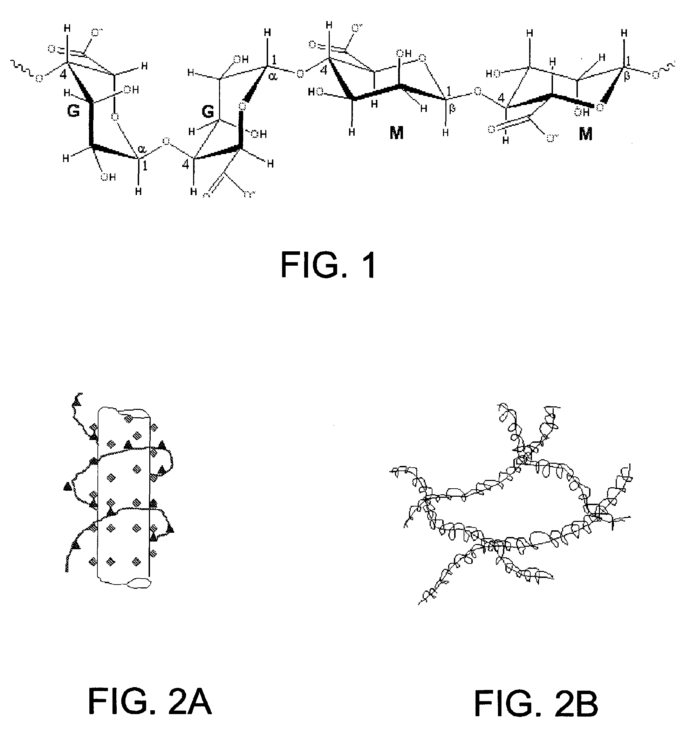

L'acide alginique est un polymère naturel de formule brute (C₆H₇NaO₆) n constitué de deux unités monosaccharidiques : l'acide D-mannuronique (M) et l'acide L-guluronique (G) (Figure 1). Le nombre d'unités de bases des alginates est généralement d'environ 200. La proportion en acide mannuronique et en acide guluronique varie d'une espèce d'algue à l'autre et le nombre d'unités M sur le nombre d'unités G peut aller de 0,5 à 1,5 de préférence de 1 à 1,5.

Les alginates sont des polymères non ramifiés linéaires et ne sont pas généralement des copolymères statistiques mais selon l'algue dont ils proviennent ils sont constitués de séquences d'unités similaires ou alternées à savoir des séquences GGGGGGGG, MMMMMMMM, ou GMGMGMGM.

Par exemple le rapport M/G de l'alginate issu de *Macrocystis pyrifera* est d'environ 1, 6 tandis que le rapport M/G de l'alginate issu de *Laminaria hyperborea* est d'environ 0, 45.

Parmi les alginates polysaccharides issus de la *Laminaria hyperborea* on peut citer la Satialgine SG 500, parmi les alginates polysaccharides issus de *Macrocystiis pyrifera* de différentes longueurs de molécule on peut citer les polysaccharides dénommés A7128, A2033 et A2158 qui sont des génériques d'acides alginiques.

La macromolécule de polysaccharide mise en oeuvre selon l'invention a généralement une masse moléculaire de 80000 g/mol à 500000 g/mol, de préférence de 80000 g/mol à 450000 g/mol.

La dispersion des nanoobjets ou nanostructures dans le premier solvant et la mise en solution des polysaccharides peuvent être deux opérations simultanées, ou bien il peut s'agir de deux opérations consécutives, la dispersion précédant la mise en solution, ou vice et versa.

La dispersion des nanoobjets tels que des nanotubes, ou des nanostructures, dans le premier solvant peut se faire en ajoutant les nanoobjets au premier solvant et en soumettant le solvant à l'action d'ultrasons avec une densité de puissance acoustique généralement de 1 à 1000 W/cm², par exemple de 90W/cm², pendant une durée généralement de 5 minutes à 24 heures, par exemple de 2 heures.

La mise en solution des polysaccharides peut se faire par simple addition au premier solvant sous agitation généralement à une température de 25°C à 80°C par exemple de 50°C, pendant une durée généralement de 5 min à 24 heures, par exemple de deux heures.

La teneur en nanoobjets ou nanostructures et la teneur en polysaccharides dépendent de la quantité de nanoobjets et de nanostructures à enrober par rapport à la quantité de molécules de polysaccharides.

La teneur en nanoobjets dans le premier agglomérat, ou agglomérat gélifié, ainsi que la teneur en polysaccharides sont généralement inférieures ou égales à 5% en masse, de préférence inférieures ou égales à 1% en masse, de la masse du solvant. On a vu plus haut que l'invention permettait, à de telles concentrations « faibles » d'obtenir des effets particulièrement avantageux. De préférence encore la teneur en nanoobjets et la teneur en polysaccharides sont de 10 ppm à 5% en masse, de préférence encore de 10 ppm à 1% en masse, et mieux de 10 ppm à 0,1% en masse de la masse du solvant dans le premier agglomérat ou agglomérat gélifié.

Le rapport du nombre, de la quantité, de macromolécules au nombre de nanoobjets dans la première solution et par voie de conséquence dans les premiers agglomérats ou agglomérats gélifiés est généralement de 0,1 à 10 de préférence égal ou voisin de 1.

Ce rapport entre la quantité, le nombre de macromolécules de polysaccharides et la quantité, le nombre de nanoobjets ou de nanostructures fixe le niveau de dispersion ou facteur de dispersion et la distance moyenne pour les nanoparticules, ou fixe la maille élémentaire du réseau pour les nanostructures, nanofils et nanotubes.

Si l'on prend comme exemple de nanoobjets les nanotubes de carbone multiparoi (« MWCNT »), le plus petit de ces tubes fait en moyenne 1,5 nm et le plus gros 20 nm.

Un nanotube multiparoi contient en moyenne 20 nanotubes encastrés les uns dans les autres sur une longueur moyenne de 1 µm. Une solution de 100 ml d'eau contenant 0,1% de « MWCNT » conduit à disperser environ 10^{1f} nanoobjets dans 100 ml d'eau. La quantité minimale de 10¹⁶ macromolécules de polysaccharides, correspond par exemple pour le polysaccharide de l'algue *Phaeophyceae* à une quantité minimale de 20% en masse, pour une masse molaire de polysaccharide tel qu'un alginate comprise entre 80 000g/mol et 120 000g/mol. Avec ces quantités optimales de nanotubes et de polysaccharide, chaque macromolécule de polysaccharide s'enroule hélicoïdalement autour d'un nanotube pour minimiser les énergies d'interactions électrostatiques entre les O⁻ de la molécule polysaccharide (figure 1) et les sites acides des « MWCNT » (figure 2A).

Sur la figure 1 on donne un exemple de structure chimique d'une macromolécule de polysaccharide, à savoir une molécule d'alginate issue de l'algue brune *Phaeophyceae.* Il est bien entendu que toute molécule appartenant à la famille des polysaccharides peut être utilisée dans le procédé selon l'invention et que les explications données dans la présente s'appliquent à toute macromolécule de polysaccharide. De même la présente description s'applique à tout nanoobjet, à toute nanostructure et n'est pas limitée aux nanotubes.

La présence des liaisons -OH et des fonctions anioniques -O⁻ dans la structure chimique du polysaccharide tel que celui représenté sur la figure 1 permet d'assurer respectivement la solubilisation dans le solvant, à savoir généralement essentiellement dans l'eau et l'encapsulation, l'enrobage des nanoobjets tels que des nanotubes ou nanostructures du fait de l'attraction électrostatique entre les fonctions polaires et acides. La structure hélicoïdale des polysaccharides permet l'enroulement de ces macromolécules autour des nanoobjets et notamment autour des nanotubes de carbone.

La topologie de la macromolécule à l'échelle nanométrique est représentée sur les figures 2A et 2B.

La figure 2A montre l'enroulement d'une molécule de polysaccharide telle que celle de la figure 1 autour d'un nanotube de carbone multiparoi par interaction électrostatique des sites acides, tandis que la figure 2B montre la nanostructure en réseau de nanotubes de carbone multiparoi avec des molécules de polysaccharide telles que celles de la figure 1.

Comme on l'a déjà indiqué plus haut, le rapport des quantités de macromolécules de polysaccharides et la quantité de nanoobjets ou nanostructures tels que des nanotubes de carbone, fixe la dimension de la maille élémentaire du réseau de nanoobjets ou nanostructures tels que des nanotubes de carbone et donc le facteur de dispersion.

Pour des nanotubes de 1 µm de long en moyenne, la taille de la maille maximale pour la percolation des 4 faces d'un cube de 1 µm³ est une maille de 1 µm x 1 µm. Il faut au minimum 3 nanotubes de carbone (CNTs) pour percoler toutes les faces du cube, ce qui correspond par changement d'échelle, une quantité de 3.10¹² CNTs pour 1 cm³ de solution et 3.10¹⁴ CNTs pour 100ml.

Cette concentration de CNTs correspond à un rapport massique de 0,1% en poids.

Pour un rapport massique 10 fois plus important, soit 1 %, la taille de la maille sera réduite d'un rapport 10.

L'optimum du mélange sera toujours lorsque le rapport polysaccharide/nanoobjets (par exemple nanotubes) est proche de 1. C'est la concentration des espèces qui détermine la taille de la maille.

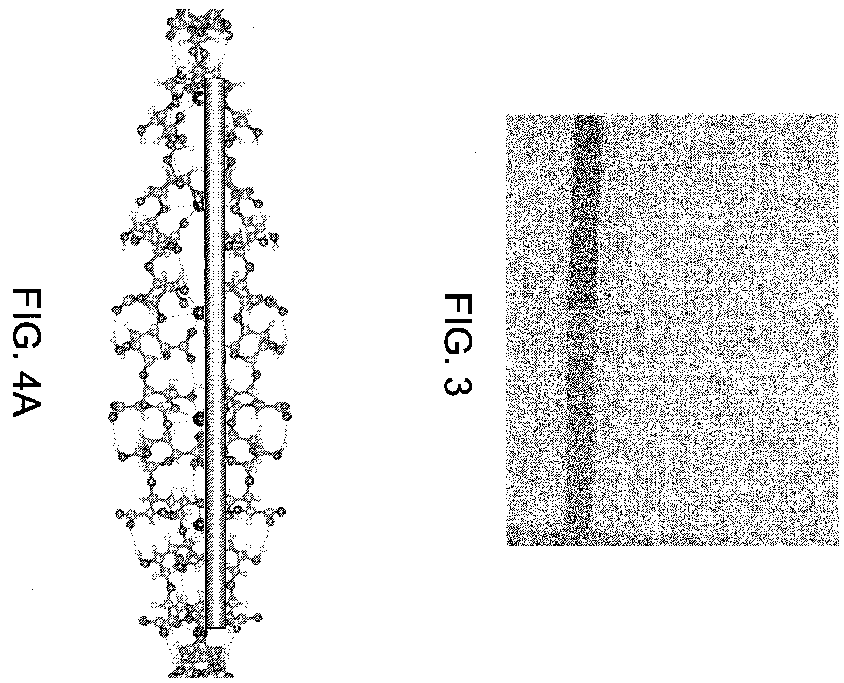

Dans une deuxième étape, on prépare des agglomérats gélifiés (premiers agglomérats) tels que ceux montrés sur la figure 3 en mettant en contact la première solution de nanoobjets dispersés préparée lors de la première étape, décrite ci-dessus, avec une deuxième solution. Cette deuxième solution est une solution, dans un deuxième solvant comprenant en majorité de l'eau, d'au moins un sel soluble dans l'eau susceptible de libérer dans la solution des cations choisis parmi les cations monovalents, divalents et trivalents.

Par solvant comprenant en majorité de l'eau on entend généralement que le solvant de la deuxième solution comprend 50% en volume ou plus d'eau, de préférence 70% en volume ou plus d'eau, et de préférence encore plus de 99% en volume d'eau.

Le solvant peut comprendre, outre de l'eau dans les proportions précitées et lorsqu'il ne comprend pas 100% d'eau, au moins un autre composé solvant choisi généralement parmi les alcools, en particulier les alcools aliphatiques tels que l'éthanol ; les solvants polaires tels que les cétones par exemple l'acétone ; et leurs mélanges.

Les cations divalents peuvent être choisis parmi Cd²⁺, Cu²⁺, Ca²⁺, Co²⁺, Mn²⁺, Fe²⁺, et Hg²⁺.

Les cations monovalents peuvent être choisis parmi Li⁺, Na⁺, K⁺, Rb⁺, Cs⁺, Ag⁺, Ti⁺, et Au⁺.

Les cations trivalents peuvent être choisis parmi Fe³⁺, et Al³⁺.

L'anion du ou des sels peut être choisi parmi les ions nitrate, sulfate, phosphate halogénures tels que chlorure, bromure.

La solution peut ne comprendre qu'un seul sel ou bien elle peut comprendre plusieurs sels.

Avantageusement la solution comprend plusieurs sels de sorte qu'un mélange de cations peut être libéré dans la deuxième solution.

De préférence la solution comprend un mélange de sels qui peut libérer dans la solution un mélange de cations comprenant au moins un cation monovalent, au moins un cation divalent, et au moins un cation trivalent.

Un mélange de cations choisis parmi les trois familles de cations monovalents, divalents, et trivalents et comprenant de préférence au moins un cation choisi dans chacune des familles, permet de maîtriser la quantité de noeuds de réticulation du système, et permet notamment de rendre cette quantité de noeuds de réticulation minimale pour assurer ainsi la stabilité structurale des agglomérats gélifiés puis des agglomérats lyophilisés.

En effet la quantité de noeuds de réticulation est un paramètre qu'il est nécessaire de maîtriser en fonction de l'utilisation qui est faite des agglomérats et de leurs applications.

La mise en contact de la première solution et de la deuxième solution est réalisée de manière générale dans les conditions suivantes :

Dans un premier mode de réalisation de cette mise en contact, la solution de nanoobjets ou nanostructures dispersés tombe par goutte à goutte dans la deuxième solution. Dans ce cas, la taille de l'embout est importante puisqu'elle conditionne la taille de l'agglomérat gélifié. Trop gros, la lyophilisation, extraction par exemple de l'eau, se passe moyennement bien et le retrait est plus important donc la dispersion moins bonne.

Trop petit, les agglomérats se lyophilisent parfaitement, mais le temps de préparation de ces agglomérats gélifiés est incroyablement long. L'optimum de la taille du gicleur est compris entre 0,5 et 2 mm, idéalement 1 mm.

Suivant les conditions de la mise en contact et la nature des nanoobjets ou nanostructure, il est possible de fabriquer des agglomérats gélifiés sphériques ou bien des agglomérats gélifiés filamentaires et étirés avec des rapports d'étirage maîtrisés.

Dans un second mode de réalisation de cette mise en contact et contrairement à la technique du goutte à goutte, on réalise une mise en contact continue avec la solution réticulante par un gicleur directement placé dans la solution réticulante.

La forme et la taille du gicleur, et en particulier le rapport du diamètre du cylindre d'entrée sur le diamètre du cylindre de sortie et la longueur de celui-ci conditionnent le rapport d'étirage des nanoobjets tels que les nanotubes de carbone.

A titre d'exemple un diamètre d'entrée et de sortie respectivement de 2 mm et 50 µm donne un rapport d'étirage de 400%. En doublant le diamètre d'entrée pour un même diamètre de sortie, on multiplie par 4 le rapport d'étirage pour atteindre 1600%.

Ce type d'étirage permet si besoin en est d'aligner les nanoobjets comme les nanotubes de carbone. Si ce gicleur est équipé d'électrodes pour générer un champ électrique, cela permet d'organiser les nanostructures juste avant la gélification.

Les agglomérats gélifiés sphériques peuvent avoir une taille de 100 µm à 5 mm et les agglomérats filamentaires peuvent avoir une taille de 10 µm à 5 mm.

Il est en conséquence possible de maîtriser l'orientation des nanoobjets ou des nanostructures dans l'agglomérat gélifié, qui sont alignés dans le cas d'un étirage maximal, ou bien qui sont orientés de manière purement aléatoire mais régulièrement répartis, de manière homogène dans le cas des agglomérats sphériques.

Il est aussi possible de ne former seulement qu'une peau réticulée et de conserver l'intérieur des premiers agglomérats à l'état liquide. Cela peut être obtenu en projetant par « spray » la solution réticulante sur la goutte liquide en formation avant son décrochage du gicleur. Il est ainsi possible de garder une grande mobilité des nanoobjets à l'intérieur des capsules.

Dans certains domaines, il est nécessaire d'avoir des métamatériaux à haute performance, en conservant de hautes valeurs de permittivité électrique ou magnétique à de très hautes fréquences. La mobilité des porteur de charges reste donc maximale même à hautes fréquences, ce qui n'est plus le cas dans les métamatériaux solides. Conserver cette mobilité est un atout majeur. Cette capsule partiellement gélifiée peut constituer un mini-réacteur chimique dans lequel les nanoobjets peuvent participer à de nouvelles réactions chimiques associant l'inorganique à l'organique.

La deuxième étape peut être réversible. L'intérêt du caractère réversible de cette étape est notamment que dans le cas des capsules partiellement gélifiées utilisées comme miniréacteur chimique, il peut être intéressant de récupérer les produits de réaction en dégélifiant la peau du réacteur pour récupérer ainsi la nouvelle nanostructure formée. Ainsi, les premiers agglomérats peuvent être détruits, démontés, en les mettant en contact avec des agents chélatants, des chélateurs.

Ces agents chélatants sont des agents chélatants spécifiques des cations inclus dans la structure des agglomérats.

Ainsi on pourra choisir l'acide diéthylène tétramine pentaacétique (DTPA) ou l'acide éthylène diamine tétraacétique pour les cations Ca²⁺, ou la trientine (Triéthylène tétramine, TETA) pour les cations Fe³⁺ et Al³⁺.

La figure 3 est une photographie qui montre la formation, dans une éprouvette, d'un premier agglomérat ou agglomérat gélifié avec le polysaccharide de la figure 1, et des nanotubes de carbone comme nanoobjets, et un sel de calcium.

Les figures 4A et 4B montrent un exemple d'organisation à l'échelle nanométrique d'un premier agglomérat ou agglomérat gélifié comprenant des polysaccharides qui sont des alginates et des nanotubes de carbone en tant que nanoobjet, cet agglomérat ayant été préparé à partir d'une deuxième solution comprenant un sel de calcium.

Sur les figures 4A et 4B, chaque premier agglomérat ou agglomérat gélifié comprend un seul nanotube et un seul polysaccharide.

Sur les figures 4A et 4B, on note que les cations agissent comme points de réticulation (en grisé), à savoir dans ce cas les ions calcium se mettent sur les sites -O⁻ inoccupés.

Les premiers agglomérats, ou agglomérats gélifiés, obtenus à l'issue de la deuxième étape peuvent être séparés par tout procédé de séparation adéquat, par exemple par filtration. Les premiers agglomérats gélifiés peuvent être employés tels quels dans des systèmes biologiques, microfluidiques, ou comme métamatériaux pour simuler le comportement des plasmas sous rayonnement électromagnétique.

Les agglomérats gélifiés tels que des sphères obtenus lors de la deuxième étape peuvent éventuellement dans une troisième étape être traités par imprégnation par exemple avec du polyéthylène glycol ou tout autre polymère ou monomère hydrosoluble, en solution (à titre d'exemple pour l'eau, la concentration de polyéthylène glycol optimale est 20%). Des exemples de tels polymères ont déjà été donnés plus haut.

Ces agglomérats imprégnés ou non étant généralement mélangés à la (deuxième) solution aqueuse réticulante, il s'ensuit généralement une étape de séparation, par exemple par filtration par un buchner, avant que les capsules recueillies soient congelées par exemple en étant plongées dans l'azote liquide. La solidification instantanée minimise le relargage du solvant, tel que l'eau, des capsules maintenant une dispersion maximale. Cette solidification, congélation, constitue en fait la première partie du traitement de lyophilisation. Les capsules congelées peuvent être éventuellement stockées dans un congélateur avant de procéder à la sublimation et aux traitements ultérieurs.

Cette solidification, congélation des agglomérats éventuellement imprégnés, est suivie par une étape de sublimation qui constitue la deuxième partie du traitement de lyophilisation. Au cours de cette étape de sublimation, sous l'effet du vide, on élimine le solvant congelé, tel que la glace, à l'intérieur des capsules et éventuellement on cristallise le polymère tel que le polyéthylène glycol.

Les agglomérats peuvent donc être placés par exemple dans une enceinte refroidie à -20°C au minimum et sous un vide poussé (10⁻³-10⁻⁷ mbar) pour sublimer le solvant congelé tel que la glace et éventuellement cristalliser le polymère présent tel que le polyéthylène glycol.

Eventuellement, le traitement de lyophilisation peut comprendre une troisième partie au cours de laquelle on sèche à froid les agglomérats.

Il est à noter que cette étape de lyophilisation peut être réalisée même si le premier solvant ne comprend pas de polymère ou monomère et/ou si les agglomérats gélifiés ne sont pas imprégnés dans une troisième étape par un polymère ou monomère notamment hydrosoluble.

La lyophilisation peut être réalisée quel que soit le solvant des agglomérats gélifiés qu'il s'agisse d'eau ou de tout autre solvant ou mélange de solvants. Généralement, il faut cependant que le solvant des agglomérats gélifiés contienne majoritairement de l'eau.

A l'issue de la lyophilisation, il n'y a plus substantiellement de solvant dans les agglomérats lyophilisés. La teneur en solvant est généralement inférieure à 0,01% en masse.

Si le solvant des agglomérats gélifiés est constitué par de l'eau, la teneur en eau des agglomérats lyophilisés est généralement inférieure à 0,01% en masse.

Les agglomérats gélifiés obtenus à l'issue de la deuxième étape conservent leur forme et généralement 90% de leur volume après la lyophilisation.

L'organisation des nanoobjets, tels que des CNTs, est conservée dans les capsules lyophilisées, comme cela est montré sur la Figure 6.

Eventuellement, afin d'éliminer au moins en partie le polysaccharide des agglomérats lyophilisés, on soumet ces agglomérats lyophilisés à un traitement thermique ou à un traitement enzymatique.

Le traitement thermique doit généralement être réalisé à une température et pendant une durée suffisantes pour éliminer au moins en partie le polysaccharide tel que l'alginate.

Il peut aussi être réalisé à une température de 400 à 600°C, de préférence de 500 à 550°C pendant une durée de 1 à 5 heures, de préférence de 1 à 3 heures, de préférence encore de 1 à 2 heures.

Par exemple, on pourra réaliser une montée lente à raison de 1°C/minute de la température ambiante jusqu'à 500°C, maintenir la température à 500°C pendant 1 heure, puis redescendre à raison de 1°C/minute depuis 500°C jusqu'à la température ambiante.

Les conditions du traitement enzymatique peuvent être facilement déterminées par l'homme du métier. Des exemples de ces conditions ont déjà été donnés plus haut.

Les agglomérats gélifiés, ou les agglomérats lyophilisés et éventuellement traités thermiquement ou enzymatiquement sont ensuite mélangés directement par simple action mécanique aux granulés de polymères ou de composites, c'est-à-dire des mélanges de polymères et des charges inorganiques comme les fibres de verre, des particules de talc, de mica et autres éléments classiquement utilisés dans le milieu du composite.

Cette action mécanique peut comprendre une ou plusieurs opérations. Par exemple, on peut réaliser seulement une extrusion ; ou bien on peut réaliser un simple mélange mécanique, suivi éventuellement d'un séchage du mélange, suivi d'une extrusion du mélange dans une extrudeuse.

L'organisation des nanoobjets, tels que des CNTs, est conservée après mélange des capsules avec un polymère tel que le PMMA (figure 7).

L'invention va maintenant être décrite en référence aux exemples suivants, donnés à titre illustratif et non limitatif :

### EXEMPLE 1 :

Dans cet exemple on décrit la préparation d'agglomérats gélifiés conformément à l'invention (ou capsules gélifiées) à 0,1% en masse contenant des nanotubes de carbone, la lyophilisation de ces agglomérats gélifiés, et l'intégration de ces agglomérats lyophilisés dans deux polymères (polypropylène et polyamide 6) par un procédé conforme à l'invention.

La préparation des agglomérats gélifiés comprend les étapes successives suivantes :
- dans un bécher 1 on verse, dans l'ordre, 100 ml d'eau déionisée avec 0,5 g d'Alginate qui est un sel de sodium de l'acide alginique extrait d'algues brunes (« Alginic Acid sodium salt from brown algae », CAS Number 9005-38-3, fournisseur Sigma Aldrich^{®}) ;
- on place un agitateur magnétique dans le bécher 1 et on mélange l'ensemble à 50°C pendant 2 heures ;
- ensuite on ajoute 0,1 g de nanotubes de carbone multiparoi (« MWCNT ») (fournis par Nanocyl^{®}) purifiés à 95%, d'un diamètre moyen de 9,5 nm, et d'une longueur moyenne de 1,5 µm ;
- on disperse les nanotubes sous l'action d'ultrasons (Machine Hielscher^{®} 200S de 2006, fréquence 24 kHz, avec une sonde micro tip S7 de diamètre 7 mm, réglage de l'amplitude à 30% x 175µm soit 52 µm, soit une densité de puissance acoustique de 30%x300 W/cm², soit 90W/cm²). La durée d'agitation par les ultrasons est de 2 heures ;
- pour finir on ajoute 20 g de PEG 4000 (fournisseur VWR-Prolabo^{®}). En ajoutant le PEG directement dans la solution, dispersion, du bécher 1 on évite ainsi l'étape d'imprégnation ;
- dans un bécher 2, on verse 100 ml d'eau déionisée et 1g de CaCl₂ ( CaCl₂ « died powder », pureté 97%, CAS Number 10043-52-4) et agite à l'aide d'un barreau magnétique à température ambiante pendant 1 heure ;
- la formation des agglomérats, granulats, est effectuée de manière automatique avec une pompe péristaltique réglée à un débit de 0,8 ml/min. L'embout utilisé pour former les agglomérats est une pipette Pasteur disposée au-dessus d'une burette de 100 ml contenant la solution du bécher 2 (solution réticulante). Dans le bécher 2 tombent des gouttes du contenu du bécher 1 qui se trouvent dans la pipette Pasteur ;
- l'agglomérat, la capsule tel(le) qu'il(elle) est représenté(e) sur les figures 3 et 4 est formé® instantanément lorsque la goutte se décroche par la gravité de la pipette Pasteur, et tombe dans le contenu de la burette. La capsule flotte un court instant et coule lorsque celle-ci est complètement réticulée par les ions Ca²⁺ ;
- les agglomérats, capsules sont ensuite filtré(e)s dans un « buchner » contenant un filtre papier ;
- les agglomérats et le filtre sont ensuite plongés instantanément dans l'azote liquide pour congeler les capsules ;
- les agglomérats peuvent être stockés dans un congélateur à -20°C avant d'être lyophilisés, ou plus exactement soumis à la partie "sublimation" du traitement de lyophilisation ;
- la lyophilisation est effectuée dans un appareil commercial (LL1500 de Thermo-Fischer-Scientifique^{®}) d'une capacité de 1,5 Kg/24heures et d'une capacité maximale de 3 Kg. La température du condenseur est à -110°C.

Les agglomérats lyophilisés ainsi préparés sont ensuite mélangés mécaniquement avec 100g de granulés de polypropylène.

Le mélange est ensuite séché à 40°C pendant 12 heures avant extrusion dans une extrudeuse Thermo-Fisher Electron PRISM 16^{®} avec 11 zones de chauffe.

Le profil de vis possède trois zones de cisaillement régulièrement réparties sur une longueur de 1 m.

Le profil de température pour le polypropylène est 170°C, 190°C, 200°C, 220°C, 230°C, 230°C, 230°C, 220°C, 200°C, 190°C, 180°C. La première valeur correspond à la tête de l'extrudeuse au niveau de la filière, et la dernière valeur correspond à la zone d'introduction du mélange de granulés de polymère et des agglomérats.

Les agglomérats lyophilisés préparés comme ci-dessus ont également été introduits dans du polyamide 6.

Le mode opératoire est le même que celui déjà décrit plus haut pour le polypropylène ; seul le profil de température est changé, il est 250°C, 270°C, 270, 270°C, 270°C, 270°C, 270°C, 270°C, 270°C, 270°C, 250°C.

### EXEMPLE 2 :

Dans cet exemple on décrit la préparation d'agglomérats gélifiés conformément à l'invention, contenant des nano-traceurs, la lyophilisation de ces agglomérats gélifiés, et l'intégration de ces agglomérats lyophilisés dans deux polymères (polypropylène et polyamide 6) par un procédé conforme à l'invention.

La préparation des agglomérats gélifiés comprend les étapes successives suivantes :
- dans un bécher 1 on verse, dans l'ordre, 100 ml d'eau déionisée avec 0,5 g d'Alginate qui est un sel de sodium de l'acide alginique extrait d'algues brunes (« Alginic Acid sodium salt from brown algae », CAS Number 9005-38-3, fournisseur Sigma Aldrich^{®}) ;
- on place un agitateur magnétique dans le bécher 1, et on mélange l'ensemble à 50°C pendant 2 heures ;
- ensuite on ajoute 10 ml d'une solution aqueuse de nanotraceurs composés d'oxyde de terre rare comme le Gd₂O₃ dopé avec de l'Europium concentré à 1% en masse ;
- on disperse les nanotraceurs sous l'action d'ultrasons (Machine Hielscher 200S^{®} de 2006, fréquence 24 kHz, avec une sonde micro tip S7 de diamètre 7 mm, réglage de l'amplitude à 30% x 175µm soit 52 µm, soit une densité de puissance acoustique de 30%x300 W/cm², soit 90W/cm²). La durée d'agitation par les ultrasons est de 10 minutes ;
- pour finir on ajoute 20 g de PEG 4000 (fournisseur VWR-Prolabo^{®}) ;
- dans un bécher 2, on verse 100 ml d'eau déionisée et 1 g de CaCl₂ ( CaCl₂ « died powder », pureté 97%, CAS Number 10043-52-4), et on agite à l'aide d'un barreau magnétique à température ambiante pendant 1 heure ;
- la formation des agglomérats, granulats est effectuée de manière automatique avec une pompe péristaltique réglée à un débit de 0,8 ml/min. L'embout utilisé pour former les agglomérats est une pipette pasteur disposée au dessus d'une burette de 100 ml contenant la solution du bécher 2 ;
- l'agglomérat, la capsule contenant les nanotraceurs est formé(e) instantanément lorsque la goutte se décroche par la gravité de la pipette Pasteur et tombe dans le contenu de la burette. La capsule flotte un court instant et coule lorsque celle-ci est complètement réticulée par les ions Ca²⁺ ;
- les agglomérats sont ensuite filtrés dans un buchner contenant un filtre papier ;
- les agglomérats et le filtre sont ensuite plongés instantanément dans l'azote liquide pour congeler les capsules ;
- les agglomérats peuvent être stockés dans un congélateur à -20°C avant d'être lyophilisés ;
- la lyophilisation est effectuée dans un appareil commercial (LL1500 de Thermo-Fischer-Scientifique^{®}) d'une capacité de 1,5 Kg/24heures et d'une capacité maximale de 3 Kg. La température du condenseur est à -110°C.

Les agglomérats lyophilisés ainsi préparés sont ensuite mélangés mécaniquement avec 100g de granulés de polypropylène.

Le mélange est ensuite séché à 40°C pendant 12 heures avant extrusion dans une extrudeuse Thermo-Fisher Electron PRISM 16^{®} avec 11 zones de chauffe.

Le profil de vis possède trois zones de cisaillement régulièrement réparties sur une longueur de 1 m.

Le profil de température pour le polypropylène est 170°C, 190°C, 200°C, 220°C, 230°C, 230°C, 230°C, 220°C, 200°C, 190°C, 180°C. La première valeur correspond à la tête de l'extrudeuse au niveau de la filière, et la dernière valeur correspond à la zone d'introduction du mélange de granulés de polymère et des agglomérats.

Les agglomérats lyophilisés préparés comme ci-dessus ont également été introduits dans du polyamide 6.

Le mode opératoire est le même que celui déjà décrit plus haut pour le polypropylène ; seul le profil de température est changé il est 250°C, 270°C, 270°C, 270°C, 270°C, 270°C, 270°C, 270°C, 270°C, 270°C, 250°C.

### EXEMPLE 3 :

Dans cet exemple selon l'invention, on décrit la préparation d'agglomérats gélifiés (ou capsules gélifiées) contenant à la fois des nanotubes de carbone et des particules de cuivre, la lyophilisation de ces agglomérats gélifiés, ainsi que l'intégration de ces agglomérats lyophilisés dans deux polymères (polypropylène et polyamide 6) par un procédé conforme à l'invention.
- La préparation des agglomérats gélifiés comprend les étapes successives suivantes :
   - dans un bécher 1 on verse, dans l'ordre, 100 ml d'eau déionisée avec 0,5 g d'Alginate qui est un sel de sodium de l'acide alginique extrait d'algues brunes (« Alginic Acid sodium salt from brown algae », CAS Number 9005-38-3, fournisseur Sigma Aldrich^{®}) ;
   - on place un agitateur magnétique dans le bécher 1 et on mélange l'ensemble à 50°C pendant 2 heures ;
   - ensuite on ajoute 0,1 g de MWCNT (fournisseur Nanocyl^{®}) , purifiés à 95%, diamètre moyen 9,5 nm, longueur moyenne 1,5µm) ;
   - on disperse les nanotubes sous l'action d'ultrasons (Machine Hielscher 200S^{®} de 2006, fréquence 24 kHz, avec une sonde micro tip S7 de diamètre 7 mm, réglage de l'amplitude à 30% x 175µm soit 52 µm, soit une densité de puissance acoustique de 30%x300 W/cm², soit 90W/cm²). La durée d'agitation par les ultrasons est de 2 heures ;
   - on ajoute ensuite 0,1 g de particules de cuivre que l'on disperse aussi sous l'action d'ultrasons (Machine Hielscher 200S^{®} de 2006, fréquence 24 kHz, avec une sonde micro tip S7 de diamètre 7 mm, réglage de l'amplitude à 30% x 175µm soit 52 µm, soit une densité de puissance acoustique de 30%x300 W/cm², soit 90W/cm²). La durée d'agitation par les ultrasons est de 15 minutes ;
   - pour finir on ajoute 20 g de PEG 4000 (fournisseur VWR-Prolabo^{®}) ;
   - dans un bécher 2, on verse 100 ml d'eau déionisée et 1g de CaCl₂ ( CaCl₂ « died powder », pureté 97%, CAS Number 10043-52-4) et on agite à l'aide d'un barreau magnétique à température ambiante pendant 1 heure ;
   - la formation des agglomérats, granulats est effectuée de manière automatique avec une pompe péristaltique réglée à un débit de 0,8 ml/min. L'embout utilisé pour former les agglomérats est une pipette Pasteur disposée au-dessus d'une burette de 100 ml contenant la solution du bécher 2 ;
   - l'agglomérat, la capsule est formé(e) instantanément lorsque la goutte se décroche par la gravité de la pipette Pasteur, et tombe dans le contenu de la burette. La capsule flotte un court instant et coule lorsque celle-ci est complètement réticulée par les ions Ca²⁺.
   - les agglomérats, capsules sont ensuite filtré(e)s dans un « buchner » contenant un filtre papier.

Les agglomérats et le filtre sont ensuite plongés instantanément dans l'azote liquide pour congeler les capsules.

Les agglomérats peuvent être stockés dans un congélateur à -20°C avant d'être lyophilisés.

La lyophilisation est effectuée dans un appareil commercial (LL1500 de Thermo-Fischer-Scientifique^{®}) d'une capacité de 1,5 Kg/24 heures et d'une capacité maximale de 3 Kg. La température du condenseur est à -110°C.

Les agglomérats lyophilisés ainsi préparés sont ensuite mélangés mécaniquement avec 100 g de granulés de polypropylène.

Le mélange est ensuite séché à 40°C pendant 12 heures avant extrusion dans une extrudeuse Thermo-Fisher Electron PRISM 16^{®} avec 11 zones de chauffe.

Le profil de vis possède trois zones de cisaillement régulièrement réparties sur une longueur de 1 m.

Le profil de température pour le polypropylène est 170°C, 190°C, 200°C, 220°C, 230°C, 230°C, 230°C, 220°C, 200°C, 190°C, 180°C. Le première valeur correspond à la tête de l'extrudeuse au niveau de la filière et la dernière valeur correspond à la zone d'introduction du mélange de granulés de polymère et des agglomérats.

Les agglomérats lyophilisés préparés comme ci-dessus ont également été introduits dans du polyamide 6.

Le mode opératoire est le même que celui déjà décrit plus haut pour le polypropylène ; seul le profil de température est changé il est 250°C, 270°C, 270°C, 270°C, 270°C, 270°C, 270°C, 270°C, 270°C, 270°C, 250°C.

### REFERENCES

[1] TAKAYANAGI M., OGATA T., MORIKAWA M., KAI T., J.Macromol. Sci.-Phys., 1980, B17 (4), 591-615(1980).
[2] EP-A1-1 728 822.

## Revendications

1. Agglomérat ou capsule préparé(e) par lyophilisation d'un premier agglomérat ou première capsule, ledit premier agglomérat ou première capsule comprenant un solvant, des nanoobjets ou nanostructures enrobés par des macromolécules de polysaccharides étant répartis de manière homogène dans ledit premier agglomérat ou première capsule, et lesdites macromolécules formant dans au moins une partie du premier agglomérat ou première capsule, un gel par réticulation avec des ions positifs.

2. Agglomérat selon la revendication 1, dans lequel le gel est formé dans la totalité du premier agglomérat, ou bien le gel est formé seulement à la surface du premier agglomérat, l'intérieur du premier agglomérat étant à l'état liquide.

3. Agglomérat selon la revendication 1, dans lequel la concentration des nanoobjets ou nanostructures est inférieure ou égale à 5% en masse, de préférence inférieure ou égale à 1% en masse, de préférence encore elle est de 10 ppm à 0,1% en masse de la masse totale du premier agglomérat.

4. Agglomérat selon l'une quelconque des revendications précédentes, dans lequel le solvant comprend en volume 50% d'eau ou plus, de préférence 70% d'eau ou plus, de préférence encore 99% d'eau ou plus , mieux 100 % d'eau ; de préférence le solvant du premier agglomérat, lorsqu'il ne comprend pas 100% d'eau, comprend en outre au moins un autre composé solvant choisi parmi les alcools, en particulier les alcools aliphatiques tels que l'éthanol ; les solvants polaires, en particulier les cétones telles que l'acétone ; et leurs mélanges.

5. Agglomérat selon l'une quelconque des revendications précédentes, dans lequel le solvant du premier agglomérat comprend en outre un polymère ou monomère soluble dans celui-ci.

6. Agglomérat selon l'une quelconque des revendications précédentes, dans lequel les nanoobjets sont choisis parmi les nanotubes, les nanofils, les nanoparticules, les nanocristaux, et les mélanges de ceux-ci.

7. Agglomérat selon l'une quelconque des revendications précédentes, dans lequel les nanoobjets ou nanostructures sont fonctionnalisés, notamment chimiquement.

8. Agglomérat selon l'une quelconque des revendications précédentes, dans lequel le matériau constituant les nanoobjets ou les nanostructures est choisi parmi le carbone, les métaux, les alliages métalliques, les oxydes métalliques tels que les oxydes de terres rares éventuellement dopés, les polymères organiques, et les matériaux comprenant plusieurs parmi ceux-ci.

9. Agglomérat selon l'une quelconque des revendications précédentes, dans lequel les nanoobjets sont des nanotubes de carbone par exemple des nanotubes de carbone mono paroi ou multiparoi ; ou des nanoparticules de métaux ou d'alliages métalliques ou d'oxydes métalliques.

10. Agglomérat selon l'une quelconque des revendications précédentes, dans lequel les macromolécules de polysaccharide sont choisies parmi les pectines, les alginates, l'acide alginique, et les carraghénanes ; de préférence, les alginates sont des alginates qui sont extraits d'algues brunes *Phaeophyceae,* principalement les *Laminaria* telles que *Laminaria hyperborea ;* et les *Macrocystis* telles que *Macrocystis pyrifera.*

11. Agglomérat selon l'une quelconque des revendications précédentes, dans lequel le premier agglomérat est imprégné par au moins un polymère ou monomère soluble dans le solvant du premier agglomérat, de préférence par un polymère ou monomère hydrosoluble tel que le polyéthylène glycol (PEG).

12. Agglomérat selon l'une quelconque des revendications précédentes qui est en outre polymérisé et/ou réticulé.

13. Agglomérat selon l'une quelconque des revendications précédentes dans lequel le premier agglomérat après la lyophilisation subit en outre un traitement thermique ou enzymatique pour éliminer au moins en partie le polysaccharide.

14. Agglomérat selon la revendication 13, dont la teneur en nanoobjets ou nanostructures est de 50 à 100% en masse, de préférence de 80 à 100% en masse.

15. Utilisation de l'agglomérat selon l'une quelconque des revendications 1 à 14 dans des systèmes microfluidiques, ou comme métamatériau notamment pour simuler le comportement des plasmas sous rayonnement électromagnétique.

16. Matériau nanocomposite solide à matrice polymère ou composite comprenant l'agglomérat selon l'une quelconque des revendications 1 à 14, dans lequel les nanoobjets ou nanostructures sont répartis de manière homogène ; le(s) polymère(s) de la matrice étant choisi(s) de préférence parmi les polymères aliphatiques et apolaires comme les polyoléfines telles que les polyéthylènes, et les polypropylènes, les copolymères de cyclooléfines, les polystyrènes ; les polymères polaires tels que les polyamides et les poly(méth)acrylates comme le PMMA ; et les mélanges de ceux-ci ; ainsi que les polymères qui fondent ou qui sont solubles dans l'eau ; et le composite étant choisi de préférence parmi les matériaux composites comprenant au moins un polymère et une charge inorganique.

17. Procédé de préparation de l'agglomérat selon l'une quelconque des revendications 1 à 14, dans lequel on réalise les étapes successives suivantes :
a) on disperse dans un premier solvant comprenant en majorité de l'eau des nanoobjets ou nanostructures, on met en solution dans le premier solvant des macromolécules de polysaccharide et éventuellement un polymère ou monomère soluble dans le premier solvant, moyennant quoi on obtient une première solution ;
b) on prépare une troisième solution en mettant en contact la première solution avec une deuxième solution dans un deuxième solvant comprenant en majorité de l'eau, d'au moins un sel soluble dans l'eau, susceptible de libérer dans la deuxième solution des cations monovalents, divalents ou trivalents, moyennant quoi on obtient un premier agglomérat ;
c) on sépare le premier agglomérat de la troisième solution ;
d) on lyophilise le premier agglomérat ;
e) éventuellement, on réalise un traitement thermique ou enzymatique du premier agglomérat lyophilisé.

18. Procédé selon la revendication 17, dans lequel le premier solvant et le deuxième solvant comprennent chacun en volume 50% d'eau ou plus, de préférence 70% en volume d'eau ou plus, de préférence encore 99% en volume d'eau ou plus , mieux 100 % en volume d'eau ; de préférence le premier solvant et le deuxième solvant, lorsqu'ils ne comprennent pas 100% d'eau, comprennent chacun en outre au moins un autre composé solvant choisi parmi les alcools, en particulier les alcools aliphatiques tels que l'éthanol ; les solvants polaires, en particulier les cétones telles que l'acétone ; et leurs mélanges.

19. Procédé selon l'une quelconque des revendications 17 à 18, dans lequel la dispersion des nanoobjets dans le solvant et la mise en solution des polysaccharides sont deux opérations simultanées, ou deux opérations consécutives, la dispersion précédant la mise en solution, ou vice et versa.

20. Procédé selon l'une quelconque des revendications 17 à 19, dans lequel le rapport du nombre de macromolécules au nombre de nanoobjets dans la première solution est de 1 à 10 de préférence égal à ou voisin de 1.

21. Procédé selon l'une quelconque des revendications 17 à 20, dans lequel la teneur en nanoobjets et la teneur en macromolécules de polysaccharides sont inférieures ou égales à 5% en masse, de préférence inférieures ou égales à 1% en masse, de préférence encore de 10 ppm à 0,1% en masse de la masse du premier solvant.

22. Procédé selon l'une quelconque des revendications 17 à 21, dans lequel les cations divalents sont choisis parmi Cd2+, Cu2+, Ca2+, Co2+, Mn2+, Fe2+, Hg2+ ; les cations monovalents sont choisis parmi Li+, Na+, K+, Rb+, Cs+, Ag+, Ti+, Au+ ; et les cations trivalents sont choisis parmi Fe3+, et A13+.

23. Procédé selon l'une quelconque des revendications 17 à 22, dans lequel la deuxième solution comprend plusieurs sels de sorte qu'un mélange de cations, de préférence un mélange de cations comprenant au moins un cation monovalent, au moins un cation divalent, et au moins un cation trivalent peut être libéré dans la deuxième solution.

24. Procédé selon l'une quelconque des revendications 17 à 23, comprenant en outre une étape c) au cours de laquelle l'agglomérat est mis en contact avec au moins un agent chélatant tel que l'acide diéthylène tétramine pentaacétique (DTPA), l'acide éthylène diamine tétraacétique, ou la trientine (Triéthylène tétramine, TETA).

25. Procédé selon l'une quelconque des revendications 17 à 24, dans lequel à l'issue de l'étape b) ou c) on imprègne l'agglomérat par une solution d'un polymère ou monomère soluble dans le premier solvant, de préférence par une solution aqueuse d'un polymère ou monomère hydrosoluble.

26. Procédé de préparation d'un matériau nanocomposite selon la revendication 16, dans lequel on procède à l'incorporation par exemple par un procédé de plasturgie tel que l'extrusion, d'au moins un agglomérat selon l'une quelconque des revendications 1 à 14, dans une matrice polymère ou composite ; le(s) polymère(s) de la matrice étant choisi(s) de préférence parmi les polymères aliphatiques et apolaires comme les polyoléfines telles que les polyéthylènes, et les polypropylènes, les copolymères de cyclooléfines, les polystyrènes ; les polymères polaires tels que les polyamides et les poly(méth)acrylates comme le PMMA ; et les mélanges de ceux-ci ; ainsi que les polymères qui fondent ou qui sont solubles dans l'eau ; et le composite étant choisi de préférence parmi les matériaux composites comprenant au moins un polymère et une charge inorganique.

## Patentansprüche

1. Agglomerat oder Kapsel, hergestellt durch Lyophilisation eines ersten Agglomerats oder einer ersten Kapsel, wobei das erste Agglomerat oder die erste Kapsel ein Lösungsmittel umfasst, die Nanogegenstände oder Nanostrukturen, umhüllt von Polysaccharid-Makromolekülen, homogen in dem ersten Agglomerat oder der ersten Kapsel verteilt sind, und die genannten Makromoleküle in wenigstens einem Teil des ersten Agglomerats oder der ersten Kapsel durch Vernetzung mit positiven Ionen ein Gel bilden.

2. Agglomerat nach Anspruch 1, bei dem das Gel in der Gesamtheit des ersten Agglomerats gebildet wird, oder das Gel auch nur an der Oberfläche des ersten Agglomerats gebildet wird, wobei das Innere des ersten Agglomerats sich im flüssigen Zustand befindet.

3. Agglomerat nach Anspruch 1, bei dem die Konzentration der Nanogegenstände oder Nanostrukturen weniger als oder gleich 5 Massen%, vorzugsweise weniger als oder gleich 1 Massen%, noch bevorzugter 10 ppm bis 0,1 Massen% der Gesamtmasse des ersten Agglomerats beträgt.

4. Agglomerat nach einem der vorhergehenden Ansprüche, bei dem das Lösungsmittel 50 Massen% Wasser oder mehr, vorzugsweise 70% Wasser oder mehr, noch bevorzugter 99% Wasser oder mehr, am besten 100% Wasser enthält ; vorzugsweise enthält das Lösungsmittel des ersten Agglomerats, wenn es nicht 100% Wasser enthält, wenigstens eine weitere Lösungsmittelverbindung, ausgewählt unter den Alkoholen, insbesondere den aliphathischen Alkoholen, zum Beispiel Ethanol ; den polaren Lösungsmitteln, insbesondere den Ketonen wie zum Beispiel Azeton ; und ihren Mischungen.

5. Agglomerat nach einem der vorhergehenden Ansprüche, bei dem das Lösungsmittel des ersten Agglomerats außerdem ein in diesem lösliches Polymer oder Monomer enthält.

6. Agglomerat nach einem der vorhergehenden Ansprüche, bei dem die Nanogegenstände ausgewählt werden unter den Nanoröhren, den Nanodrähten, den Nanopartikeln, den Nanokristallen, und den Mischungen von diesen.

7. Agglomerat nach einem der vorhergehenden Ansprüche, bei dem die Nanogegenstände funktionalisiert sind bzw. werden, besonders chemisch.

8. Agglomerat nach einem der vorhergehenden Ansprüche, bei dem das die Nanogegenstände oder die Nanostrukturen bildende Material ausgewählt wird unter Kohlenstoff, den Metallen, den Metalllegierungen, den Metalloxiden wie zum Beispiel den eventuell dotierten Seltenerdenoxiden, den organischen Polymeren, und den mehrere von diesen enthaltenden Materialien.

9. Agglomerat nach einem der vorhergehenden Ansprüche, bei dem die Nanogegenstände Kohlenstoff-Nanoröhren sind, zum Beispiel einwandige oder mehrwandige Kohlenstoff-Nanoröhren ; oder Nanopartikel aus Metall oder Metalllegierungen oder Metalloxiden.

10. Agglomerat nach einem der vorhergehenden Ansprüche, bei dem die Polysaccharid-Makromoleküle ausgewählt werden unter den Pektinen, den Alginaten, der Alginsäure, und den Carragheenen ; die Alginate sind vorzugsweise Alginate, die extrahiert werden aus *Phaeophyceae*-Braunalgen, hauptsächlich die *Laminaria* wie zum Beispiel *Laminaria hyperborea ;* und die *Macrocystis* wie zum Beispiel die *Macrrocystis pyrifera.*

11. Agglomerat nach einem der vorhergehenden Ansprüche, bei dem das erste Agglomerat imprägniert wird durch wenigstens ein in dem Lösungsmittel des ersten Agglomerats löslichen Polymer oder Monomer, vorzugsweise mit einem wasserlöslichen Polymer oder Monomer wie etwa dem Polyethylenglycol (PEG).

12. Agglomerat nach einem der vorhergehenden Ansprüche, das außerdem polymerisiert und/oder vernetzt ist.

13. Agglomerat nach einem der vorhergehenden Ansprüche, bei dem das erste Agglomerat nach der Lyophilisation außerdem einer thermischen oder enzymatischen Behandlung unterzogen wird, um das Polysaccharid wenigstens teilweise zu eliminieren.

14. Agglomerat nach Anspruch 13, bei dem der Gehalt an Nanogegenständen oder Nanostrukturen 50 bis 100 Massen%, vorzugsweise 80 bis 100 Massen% beträgt.

15. Verwendung des Agglomerats nach einem der Ansprüche 1 bis 14 in mikrofluidischen Systemen oder als Metamaterial, insbesondere um das Verhalten der Plasmas unter elektromagnetischer Strahlung zu simulieren.

16. Festes Nanoverbundstoffmaterial mit Polymer- oder Verbundstoffmatrix, das Agglomerat nach einem der Ansprüche 1 bis 14 umfassend, in dem die Nanogegenstände oder Nanostrukturen auf homogene Weise verteilt sind ; wobei man das (die) Polymer(e) der Matrix vorzugsweise auswählt unter den alipathischen und apolaren Polymeren wie etwa den Polyolefinen, zum Beispiel den Polyethylenen, und den Polypropylenen, den Cycloolefin-Copolymeren, den Polystyrolen ; den polaren Polymeren wie zum Beispiel den Polyamiden und den Polymethacrylaten wie dem PMMA ; und den Mischungen von diesen ; sowie den Polymeren, die schmelzen oder die in Wasser löslich sind ; und der Verbundstoff vorzugsweise ausgewählt wird unter den wenigstens ein Polymer und einen anorganischen Füllstoff umfassenden Verbundstoffen.

17. Verfahren zu Herstellung des Agglomerats nach einem der Ansprüche 1 bis 14, bei dem man die folgenden sukzessiven Schritte ausführt:
a) man dispergiert in einem ersten mehrheitlich Wasser enthaltenden Lösungsmittel Nanogegenstände oder Nanostrukturen, man löst in dem ersten Lösungsmittel Polysaccharid-Makromoleküle auf, und eventuell ein in dem ersten Lösungsmittel lösliches Polymer oder Monomer, wodurch man eine erste Lösung erhält;
b) man stellt eine dritte Lösung her, indem man die erste Lösung mit einer zweiten Lösung in einem zweiten Lösungsmittel in Kontakt bringt, enthaltend mehrheitlich Wasser, wenigstens ein in Wasser lösliches Salz, geeignet in der zweiten Lösung einwertige, zweiwertige oder dreiwertige Kationen freizusetzen, wodurch man ein erstes Agglomerat erhält ;
c) man trennt das erste Agglomerat von der dritten Lösung ;
d) man lyophilisiert das erste Agglomerat ;
e) eventuell unterzieht man das erste lyophilisierte Agglomerat einer thermischen oder enzymatischen Behandlung.

18. Verfahren nach Anspruch 17, bei dem das erste Lösungsmittel und das zweite Lösungsmittel jeweils 50 Vol-% oder mehr Wasser, vorzugsweise 70 Vol-% oder mehr Wasser, noch bevorzugter 99 Vol-% oder mehr Wasser, am besten 100 Vol-% Wasser enthalten ; vorzugsweise enthalten das erste und das zweite Lösungsmittel, wenn sie nicht 100 % Wasser enthalten, jedes außerdem wenigstens eine andere Lösungsmittelverbindung, ausgewählt unter den Alkoholen, insbesondere den alipathischen Alkoholen wie etwa Ethanol ; den polaren Lösungsmitteln, insbesondere den Ketonen wie etwa Azeton ; und ihren Mischungen.

19. Verfahren nach einem der Ansprüche 17 bis 18, bei dem die Dispergierung der Nanogegenstände in dem Lösungsmittel und die Auflösung der Polysaccharide zwei simultane Operationen sind, oder zwei konsekutive Operationen, wobei die Dispergierung vor der Auflösung erfolgt, oder umgekehrt.

20. Verfahren nach einem der Ansprüche 17 bis 19, bei dem das Verhältnis der Anzahl der Makromoleküle zu der Anzahl der Nanogegenstände in der ersten Lösung von 1 bis 10 reicht und vorzugsweise gleich oder annähernd 1 ist.

21. Verfahren nach einem der Ansprüche 17 bis 20, bei dem der Gehalt an Nanogegenständen und der Gehalt an Polysaccharid-Makromolekülen, bezogen auf die Masse des ersten Lösungsmittels weniger als oder gleich 5 Massen%, vorzugsweise weniger als oder gleich 1 Massen%, noch bevorzugter 10 ppm bis 0,1 Massen% beträgt.

22. Verfahren nach einem der Ansprüche 17 bis 21, bei dem die zweiwertigen Kationen ausgewählt werden unter Cd2+, Cu2+, Ca2+, Co2+, Mn2+, Fe2+, Hg2+ ; die einwertigen Kationen ausgewählt werden unter Li+, Na+, K+, Rb+, Cs+, Ag+, Ti+, Au+ ; und die dreiwertigen Kationen ausgewählt werden unter Fe3+ und Al3+.

23. Verfahren nach einem der Ansprüche 17 bis 22, bei dem die zweite Lösung mehrere Salze umfasst, derart dass eine Kationenmischung, vorzugsweise eine Kationenmischung mit wenigstens einem einwertigen Kation, wenigstens einem zweiwertigen Kation und wenigstens einem dreiwertigen Kation in der zweiten Lösung freigesetzt werden kann.

24. Verfahren nach einem der Ansprüche 17 bis 23, außerdem einen Schritt c) umfassend, in dessen Verlauf das Agglomerat in Kontakt gebracht wird mit wenigstens einem chelatisierenden Mittel wie etwa der Diethylentriaminpentaessigsäure (DTPA), der Ethylendiamintetraessigsäure oder dem Trientine (Triethylentetramin, TETA).

25. Verfahren nach einem der Ansprüche 17 bis 24, bei dem man am Ende des Schritts b) oder c) das Agglomerat mit einer Lösung eines in dem ersten Lösungsmittel lösbaren Polymers oder Monomers imprägniert, vorzugsweise durch eine wässrige Lösung eines wasserlöslichen Polymers oder Monomers.

26. Herstellungsverfahren eines Nanoverbundstoffmaterials nach Anspruch 16, bei dem man, zum Beispiel durch ein Kunststoffverarbeitungsverfahren wie etwa der Extrusion wenigstens ein Agglomerat nach einem der Ansprüche 1 bis 14 in eine Polymer- oder Verbundstoffmatrix einarbeitet; wobei man das (die) Polymer(e) der Matrix vorzugsweise auswählt unter den alipathischen und apolaren Polymeren wie etwa den Polyolefinen, zum Beispiel den Polyethylenen, und den Polypropylenen, den Cycloolefin-Copolymeren, den Polystyrolen ; den polaren Polymeren wie zum Beispiel den Polyamiden und den Polymethacrylaten wie dem PMMA ; und den Mischungen von diesen ; sowie den Polymeren, die schmelzen oder die in Wasser löslich sind ; und der Verbundstoff vorzugsweise ausgewählt wird unter den wenigstens ein Polymer und einen anorganischen Füllstoff umfassenden Verbundstoffen.

## Claims

1. An agglomerate or capsule prepared by freeze-drying of a first agglomerate or first capsule, said first agglomerate or first capsule comprising a solvent, nanoobjects or nanostructures coated with macromolecules of polysaccharides being distributed homogeneously in said first agglomerate or first capsule, and said macromolecules forming in at least one portion of the first agglomerate or first capsule, a gel by crosslinking with positive ions.

2. The agglomerate according to claim 1, wherein the gel is formed in the totality of the first agglomerate, or the gel is only formed at the surface of the first agglomerate, the inside of the first agglomerate being in the liquid state.

3. The agglomerate according to claim 1, wherein the concentration of the nanoobjects or nanostructures is less than or equal to 5% by mass, preferably less than or equal to 1 % by mass, still preferably it is from 10 ppm to 0.1% by mass of the total mass of the first agglomerate.

4. The agglomerate according to any one of the preceding claims, wherein the solvent comprises by volume 50% of water or more, preferably 70% of water or more, still preferably 99% of water or more, better 100% water; preferably, the solvent of the first agglomerate, when it does not comprise 100% water, further comprises at least one other solvent compound selected from alcohols, in particular aliphatic alcohols such as ethanol; polar solvents, in particular ketones such as acetone; and their mixtures.

5. The agglomerate according to any one of the preceding claims, wherein the solvent of the first agglomerate further comprises a polymer or monomer soluble in the latter.

6. The agglomerate according to any one of the preceding claims, wherein the nanoobjects are selected from nanotubes, nanowires, nanoparticles, nanocrystals, and mixtures thereof.

7. The agglomerate according to any one of the preceding claims, wherein the nanoobjects or nanostructures are functionalizad, notably chemically functionalized.

8. The agglomerate according to any one of the preceding claims, wherein the material constituting the nanoobjects or nanostructures is selected from carbon, metals, metal alloys, metal oxides such as optionally doped rare earth oxides, organic polymers, and materials comprising several of the latter.

9. The agglomerate according to any one of the preceding claims, wherein the nanoobjects are carbon nanotubes for example single-walled or multi-walled carbon nanotubes; or nanoparticles of metals or metal alloys or metal oxides.

10. The agglomerate according to any one of the preceding claims, wherein the macromolecules of polysaccharide are selected from pectins, alginates, alginic acid, and carrageenans; preferably, the alginates are extracted from brown algae *Phaeophyceae,* mainly *Laminaria* such as *Laminaria hyperborea;* and *Macrocystis* such as *Macrocystis pyrifera.*

11. The agglomerate according to any one of the preceding claims, wherein the first agglomerate is impregnated with at least one polymer or monomer soluble in the solvent of the first agglomerate, preferably with a water-soluble polymer or monomer such as polyethylene glycol (PEG).

12. The agglomerate according to any one of the preceding claims, which is further polymerized and/or crosslinked.

13. The agglomerate according to any one of the preceding claims, wherein the first agglomerate after freeze-drying is further subject to a thermal or enzymatic treatment for removing at least partly the polysaccharide.

14. The agglomerate according to claim 13, the content of which in nanoobjects or nanostructures is from 50% to 100% by mass, preferably from 80% to 100% by mass.

15. The use of the agglomerate according to any one of the claims 1 to 14 in microfluidic systems, or as a metamaterial notably for simulating the behavior of plasmas under electromagnetic radiation.

16. A solid nanocomposite material with a polymer or composite matrix comprising the agglomerate according to any one of claims 1 to 14, wherein the nanoobjects or nanostructures are distributed homogeneously; the polymer(s) of the matrix being preferably selected from aliphatic and apolar polymers such as polyolefins, such as polyethylenes, and polypropylenes, copolymers of cycloolefins, polystyrenes; polar polymers such as polyamides and poly(meth)acrylates such as PMMA; and mixtures thereof; as well as polymers which melt or which are soluble in water; and the composite being preferably selected from composite materials comprising at least one polymer and one inorganic filler.

17. A method for preparing the agglomerate according to any one of claims 1 to 14, wherein the following successive steps are carried out:
a) Nanoobjects or nanostructures are dispersed in a first solvent comprising water in majority, polysaccharide macromolecules and optionally a polymer or monomer soluble in the first solvent are put into solution into the first solvent, as a result of which a first solution is obtained;
b) a third solution is prepared by putting the first solution in contact with a second solution in a second solvent comprising water in majority, of at least one water-soluble salt, capable of releasing in the second solution monovalent, divalent or trivalent cations, as a result of which a first agglomerate is obtained;
c) the first agglomerate is separated from the third solution;
d) the first agglomerate is freeze-dried;
e) optionally, thermal or enzymatic treatment of the first freeze-dried agglomerate is carried out.

18. The method according to claim 17, wherein the first solvent and the second solvent each comprise by volume 50% of water or more, preferably 70% by volume of water or more, still preferably 99% by volume of water or more, better 100% by volume of water; preferably, the first solvent and the second solvent, when they do not comprise 100% of water, each further comprise at least one other solvent compound selected from alcohols, in particular aliphatic alcohols such as ethanol; polar solvents, in particular ketones such as acetone; and mixtures thereof.

19. The method according to any one of claims 17 to 18, wherein the dispersion of the nanoobjects in the solvent and the putting of the polysaccharides into solution are two simultaneous operations, or two consecutive operations, the dispersion preceding the putting into solution, or vice versa.

20. The method according to any one of claims 17 to 19, wherein the ratio of the number of macromolecules to the number of nanoobjects in the first solution is from 1 to 10, preferably equal to or close to 1.

21. The method according to any one of claims 17 to 20, wherein the content of nanoobjects and the content of macromolecules of polysaccharides are less than or equal to 5% by mass, preferably less than or equal to 1% by mass, still preferably from 10 ppm to 0.1% by mass, of the mass of the first solvent.

22. The method according to any one of claims 17 to 21, wherein the divalent cations are selected from Cd²⁺, Cu²⁺, Ca²⁺, Co²⁺, Mn²⁺, Fe²⁺, Hg²⁺; the monovalent cations are selected from Li⁺, Na⁺, K⁺, Rb⁺, Cs⁺, Ag⁺, Ti⁺, Au⁺; and the trivalent cations are selected from Fe³⁺, and Al³⁺.

23. The method according to any one of claims 17 to 22, wherein the second solution comprises several salts so that a mixture of cations, preferably a mixture of cations comprising at least one monovalent cation, at least one divalent cation, and at least one trivalent cation, may be released in the second solution.

24. The method according to any one of claims 17 to 23, further comprising a step c) during which the agglomerate is put into contact with at least one chelating agent such as diethylene tetramine pentaacetic acid (DTPA), ethylene diamine tetraacetic acid, or trientine (triethylene tetramine, TETA).

25. The method according to any one of claims 17 to 24, wherein at the end of step b) or c), the agglomerate is impregnated with a solution of a polymer or monomer soluble in the first solvent, preferably with an aqueous solution of a water-soluble polymer or monomer.

26. A method for preparing a nanocomposite material according to claims 16, wherein it is proceeded with the incorporation, for example with a plastic engineering, processing, method such as extrusion, of at least one agglomerate according to any one of claims 1 to 14, in a polymer or composite matrix; the polymer of the matrix being preferably selected from aliphatic and apolar polymers such as polyolefins, such as polyethylenes, and polypropylenes, copolymers of cycloolefins, polystyrenes; polar polymers such as polyamides and poly(meth)acrylates such as PMMA; and mixtures thereof; as well as polymers which melt or which are soluble in water; and the composite being preferably selected from composite materials comprising a polymer and an inorganic filler.
